# EUROPEAN PATENT SPECIFICATION

(11) **EP 4 597 983 B1**
(45) Date of publication and mention of the grant of the patent: **27.05.2026**
(21) Application number: 23933703.3
(22) Date of filing: 14.09.2023
(51) Int. Cl.: H04L 65/1096, H04L 65/1069, H04L 65/1016

(54) **CALL PROCESSING METHODS AND DEVICE**
ANRUFVERARBEITUNGSVERFAHREN UND VORRICHTUNG
PROCÉDÉS DE TRAITEMENT D'APPEL ET DISPOSITIF

(30) Priority: 19.04.2023 CN 202310421600
(43) Date of publication of application: 06.08.2025
(73) Proprietor: Honor Device Co., Ltd., Shenzhen, Guangdong 518040 (CN)
(72) Inventor: ZHANG, Zhongli, Shenzhen, Guangdong 518040 (CN); CHEN, Shuanfeng, Shenzhen, Guangdong 518040 (CN); LI, Haibo, Shenzhen, Guangdong 518040 (CN)
(74) Representative: Thun, Clemens
(86) International application number: PCT/CN2023/118858
(87) International publication number: WO 2024/216832

(56) References cited:
- EP-A1- 3 136 756
- CN-A- 1 484 422
- CN-A- 113 542 512
- CN-A- 114 095 887
- CN-A- 115 190 468
- CN-A- 115 550 423
- CN-A- 116 170 415
- RU-C1- 2 778 098
- US-A1- 2010 022 226

## Description

This application claims priority to Chinese Patent Application CN 116 170 415 A (Application No. 202310421600.4), filed with the China National Intellectual Property Administration on April 19, 2023 and entitled "CALL PROCESSING METHOD, DEVICE, AND STORAGE MEDIUM".

### TECHNICAL FIELD

This application relates to the communication field, and in particular, to a call processing method and a terminal device.

### BACKGROUND

An IMS (IP Multimedia Subsystem, IP Multimedia Subsystem) is a concept proposed by 3GPP, is a general network architecture that provides a multimedia service in an IP-based network, and can provide a combined multimedia service and an Internet application for users using different access manners. VoLTE (Voice-over-LTE, Voice-over-LTE) and VoNR (Voice over New Radio) are currently common voice services in which an IP data transmission technology is used, that is, that are based on the IMS.

Using a voice service scenario of VoLTE as an example, after a calling terminal (for example, a terminal A) initiates a call request to a called terminal (for example, a terminal B) in an IMS network (or an IMS domain), in a process in which the terminal A waits to establish a media session (Media Session) with the terminal B, the terminal B may fail to reply for some reasons. Based on a protocol standard, the terminal B sends a corresponding error code to the IMS network, and the IMS network also delivers the error code to the terminal A. In this case, the media session between the terminal A and the terminal B cannot be established, that is, a current call fails. Currently, to improve a voice call completion rate, after the foregoing call fails, the terminal A initiates a call request to the terminal B again.

However, during actual operation, when the calling terminal receives the error code and initiates the call request to the called terminal again, the calling terminal may already receive an indication of playing a ring back tone, and already start to play the ring back tone. In this case, a calling user may already hear the ring back tone played by the calling terminal, for example, "sorry, the number you dialed is not answered for the moment". As a result, in this case, if the calling terminal initiates the call request again, use confusion is caused to the user.

US 2010/022226 A1 discloses a calling method for the video phone, the method comprising playing a Multimedia Ring Back Tone for a calling terminal via a first bearer of video phone established between a Multimedia Ring Back Tone server and the calling terminal, establishing a second bearer of video phone between a called terminal and the Multimedia Ring Back Tone server upon detecting that the called terminal answers the call and performing a video phone communication between the calling terminal and the called terminal via the first bearer and the second bearer established.

EP 3 136 756 A1 discloses a system for implementing a ring back tone. A first server of the system is configured to respond to a call from a calling party terminal and connect with a called party terminal, and trigger a second server of the system to play a ring back tone for the calling party terminal. The second server is configured to respond to the trigger of the first server and play the ring back tone for the calling party terminal.

### SUMMARY

To resolve the foregoing technical problem, this application provides a call processing method, a device, and a storage medium, to prevent a calling terminal from still performing an operation of call retrying after performing an operation of playing a ring back tone, so that use confusion caused to a user when the calling terminal still tries to call when the user already senses that this call is abnormal is avoided. The invention is defined in the independent claims. Advantageous features of the present invention are defined in the corresponding dependent claims.

According to a first aspect, this application provides a call processing method, applied to a calling terminal initiating a call request. The method includes: In a process in which the calling terminal waits to establish a media session with a called terminal, when the calling terminal receives an error code sent by a network side, the calling terminal determines whether a procedure of playing a ring back tone is already triggered currently; and when determining that the procedure of playing the ring back tone is not triggered currently, the calling terminal initiates a call request to the called terminal again; or when determining that the procedure of playing the ring back tone is already triggered currently, the calling terminal skips initiating a call request to the called terminal again.

The calling terminal may be, for example, a terminal A described below, and the called terminal may be, for example, a terminal B described below.

The network side is, for example, an IMS network described below.

It should be understood that, during actual application, any terminal may serve as both a calling terminal and a called terminal. Specifically, whether the terminal serves as the calling terminal or the called terminal is determined based on whether a currently performed call service is initiated by the terminal. To be specific, in a scenario in which the call service is initiated by the terminal device, the terminal device serves as the calling terminal; otherwise, the terminal device serves as the called terminal.

Therefore, a precondition of triggering call retrying is set, to be specific, whether the calling terminal currently does not trigger the procedure of playing the ring back tone is determined, so that the call retrying is triggered only when it is determined that the procedure of playing the ring back tone is not triggered currently, and the calling terminal skips initiating a call request to the called terminal again when the procedure of playing the ring back tone is already triggered currently. Therefore, a case in which the calling terminal still tries to call when the calling terminal already plays the ring back tone, that is, a user already senses that this call is abnormal, and use confusion is caused to the user, is avoided.

According to the first aspect, that the calling terminal determines whether a procedure of playing a ring back tone is already triggered currently includes: determining, based on a signaling message that is delivered by the network side and that is used to indicate a ring-back-tone type, whether the procedure of playing the ring back tone is already triggered currently.

The signaling message may be, for example, a 183 message, an Update message, or a 180 message described below.

It may be understood that, when whether the procedure of playing the ring back tone is already triggered currently is determined based on only the signaling message, for example, when the signaling message indicates network tone playing described below, in the following use scenario in which a user requirement is a manner 1, triggering of the procedure of playing the ring back tone is directly determined when the signaling message indicates the network tone playing.

According to any one of the first aspect or the foregoing implementations of the first aspect, the signaling message includes a first signaling message. The first signaling message is the 1^{st} signaling message that is delivered by the network side after the calling terminal initiates the call request and that indicates a ring-back-tone type, and the ring-back-tone type is used to indicate the calling terminal to perform local tone playing or network tone playing. The determining, based on a signaling message that is delivered by the network side and that is used to indicate a ring-back-tone type, whether the procedure of playing the ring back tone is already triggered currently includes: when the first signaling message is received, determining that the procedure of playing the ring back tone is already triggered currently.

When the network side supports resource reservation, the first signaling message is, for example, a 183 message described below. When the network side does not support resource reservation, the first signaling message is, for example, an Update message described below.

The local tone playing refers to that the ring back tone described below that needs to be played is locally pre-stored in the calling terminal.

The network tone playing refers to that the ring back tone described below that needs to be played is delivered to the calling terminal by the IMS network by using a ring back tone RTP packet.

In this way, it is set that, when the first signaling message is received, regardless of whether the ring-back-tone type indicated by the first signaling message is the network tone playing or the local tone playing, it is directly determined that the procedure of playing the ring back tone is already triggered currently, so that the calling terminal is directly prevented from initiating the call request to the called terminal again.

According to any one of the first aspect or the foregoing implementations of the first aspect, the signaling message includes a first signaling message. The first signaling message is the 1^{st} signaling message that is delivered by the network side after the calling terminal initiates the call request and that indicates a ring-back-tone type, and the ring-back-tone type is used to indicate the calling terminal to perform local tone playing or network tone playing. The determining, based on a signaling message that is delivered by the network side and that is used to indicate a ring-back-tone type, whether the procedure of playing the ring back tone is already triggered currently includes: when the ring-back-tone type indicated by the first signaling message indicates the calling terminal to perform network tone playing, determining that the procedure of playing the ring back tone is already triggered currently.

When the network side supports resource reservation, the first signaling message is, for example, a 183 message described below. When the network side does not support resource reservation, the first signaling message is, for example, an Update message described below.

The local tone playing refers to that the ring back tone described below that needs to be played is locally pre-stored in the calling terminal.

The network tone playing refers to that the ring back tone described below that needs to be played is delivered to the calling terminal by the IMS network by using a ring back tone RTP packet.

For processing of directly determining, based on the first signaling message when the first signaling message indicates the network tone playing, that the calling terminal triggers the procedure of playing the ring back tone, refer to a corresponding processing logic in the following use scenario in which a user requirement is a manner 1.

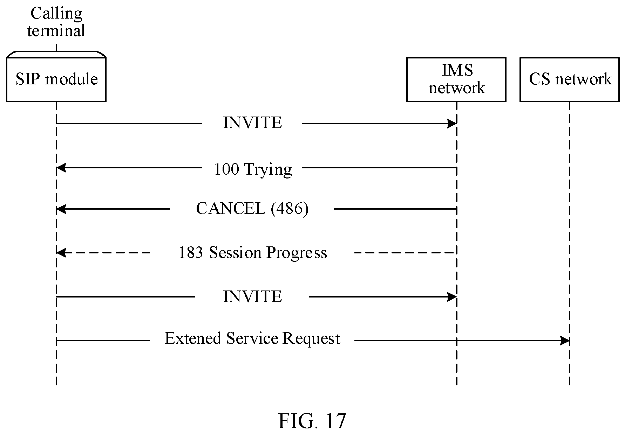

In addition, it may be understood that, if a case in which the first signaling message is not received before the error code is received actually exists, a reference identifier indicating that the calling terminal triggers the procedure of playing the ring back tone may be directly determined as a first value, that is, the calling terminal currently does not trigger the procedure of playing the ring back tone, so that the calling terminal can trigger call retrying as an implementation scenario shown in FIG. 17.

Therefore, in a case in which the calling terminal already receives the first signaling message when receiving the error code sent by the network side, whether the calling terminal already triggers an operation of the ring back tone currently is directly determined based on the ring-back-tone type indicated by the first signaling message, so that whether to initiate the call request to the called terminal again can be determined based on a determined result. Therefore, a case in which the calling terminal still tries to call when the calling terminal already plays the ring back tone, that is, a user already senses that this call is abnormal, and use confusion is caused to the user, is avoided.

According to any one of the first aspect or the foregoing implementations of the first aspect, the determining, based on a signaling message that is delivered by the network side and that is used to indicate a ring-back-tone type, whether the procedure of playing the ring back tone is already triggered currently further includes: when the ring-back-tone type indicated by the first signaling message indicates the calling terminal to perform local tone playing, determining that the procedure of playing the ring back tone is not triggered currently.

According to any one of the first aspect or the foregoing implementations of the first aspect, that the calling terminal determines whether a procedure of playing a ring back tone is already triggered currently includes: determining, based on a signaling message that is delivered by the network side and that is used to indicate a ring-back-tone type and an RTP packet delivered by the network side, whether the procedure of playing the ring back tone is already triggered currently, where the RTP packet is an audio packet corresponding to a ring back tone whose ring-back-tone type is network tone playing.

The signaling message may be, for example, a 183 message, an Update message, or a 180 message described below.

It may be understood that, when whether the procedure of playing the ring back tone is already triggered currently is determined based on both the signaling message and the RTP packet, for example, when the signaling message indicates network tone playing described below, in the following use scenario in which a user requirement is a manner 2, triggering of the procedure of playing the ring back tone is determined when the RTP packet is actually received.

According to any one of the first aspect or the foregoing implementations of the first aspect, the signaling message includes a first signaling message. The first signaling message is the 1^{st} signaling message that is delivered by the network side after the calling terminal initiates the call request and that indicates a ring-back-tone type, and the ring-back-tone type is used to indicate the calling terminal to perform local tone playing or network tone playing. The determining, based on a signaling message that is delivered by the network side and that is used to indicate a ring-back-tone type and an RTP packet delivered by the network side, whether the procedure of playing the ring back tone is already triggered currently includes: when the ring-back-tone type indicated by the first signaling message indicates the calling terminal to perform network tone playing, detecting whether the RTP packet delivered by the network side is received; and when the RTP packet is received, determining that the procedure of playing the ring back tone is already triggered currently.

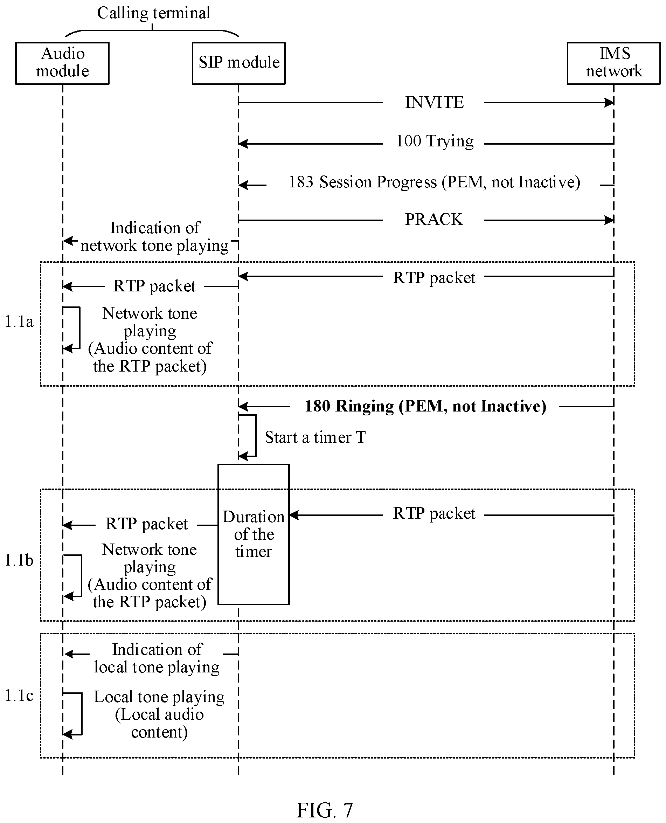

For a specific implementation of this aspect, refer to descriptions about a scenario 1.1a in the following part for FIG. 7, and details are not described herein.

According to any one of the first aspect or the foregoing implementations of the first aspect, the signaling message further includes a second signaling message. The second signaling message is a last signaling message that is delivered by the network side and that indicates a ring-back-tone type. The detecting whether the RTP packet delivered by the network side is received includes: detecting whether the RTP packet delivered by the network side is received before the second signaling message is received. The when the RTP packet is received, determining that the procedure of playing the ring back tone is already triggered currently includes: when the RTP packet is received before the second signaling message is received, determining that the procedure of playing the ring back tone is already triggered currently.

For a specific implementation of this aspect, refer to descriptions about a scenario 1.1a in the following part for FIG. 7, and details are not described herein.

According to any one of the first aspect or the foregoing implementations of the first aspect, when the RTP packet is not received when the second signaling message is received, the method further includes: determining that the procedure of playing the ring back tone is already triggered currently.

For a specific implementation of this aspect, refer to the following descriptions in which a 180 message indicates network tone playing in a use scenario in which a user requirement is a manner 1 in a scenario 1.1.

According to any one of the first aspect or the foregoing implementations of the first aspect, when the RTP packet is not received when the second signaling message is received, the method further includes: when the ring-back-tone type indicated by the second signaling message indicates the calling terminal to perform local tone playing, determining that the procedure of playing the ring back tone is already triggered currently; or when the ring-back-tone type indicated by the second signaling message indicates the calling terminal to perform network tone playing, starting a timer; detecting whether the RTP packet delivered by the network side is received within duration of the timer; and when the RTP packet is received within the duration of the timer, determining that the procedure of playing the ring back tone is already triggered currently.

For a specific implementation of this aspect, refer to the following descriptions about a scenario 1.1b.

According to any one of the first aspect or the foregoing implementations of the first aspect, the method further includes: when the RTP packet is not received within the duration of the timer, generating a local tone playing indication, to indicate the calling terminal to perform local tone playing, and determining that the procedure of playing the ring back tone is already triggered currently.

For a specific implementation of this aspect, refer to the following descriptions about a scenario 1.1c.

According to any one of the first aspect or the foregoing implementations of the first aspect, the second signaling message is a 180 message.

According to any one of the first aspect or the foregoing implementations of the first aspect, the signaling message further includes a third signaling message. The third signaling message is a signaling message that is received by the calling terminal between the first signaling message and a second signaling message and that is used to indicate a ring-back-tone type. The second signaling message is a last signaling message that is delivered by the network side and that indicates a ring-back-tone type. After the first signaling message is received, the method further includes: when the third signaling message is received, determining that the procedure of playing the ring back tone is already triggered currently.

The third signaling message is, for example, an Update message described below.

In this way, it is set that, when the third signaling message is received, regardless of whether the ring-back-tone type indicated by the third signaling message is the network tone playing or the local tone playing, it is directly determined that the procedure of playing the ring back tone is already triggered currently, so that the calling terminal is directly prevented from initiating the call request to the called terminal again.

According to any one of the first aspect or the foregoing implementations of the first aspect, the signaling message further includes a third signaling message. The third signaling message is a signaling message that is received by the calling terminal between the first signaling message and a second signaling message and that is used to indicate a ring-back-tone type. The second signaling message is a last signaling message that is delivered by the network side and that indicates a ring-back-tone type. After the first signaling message is received, the method further includes: when the third signaling message is received, and the ring-back-tone type indicated by the third signaling message indicates the calling terminal to perform local tone playing, determining that the procedure of playing the ring back tone is not triggered currently; or when the third signaling message is received, and the ring-back-tone type indicated by the third signaling message indicates the calling terminal to perform network tone playing, detecting whether an RTP packet delivered by the network side is received; and when the RTP packet is received, determining that the procedure of playing the ring back tone is already triggered currently.

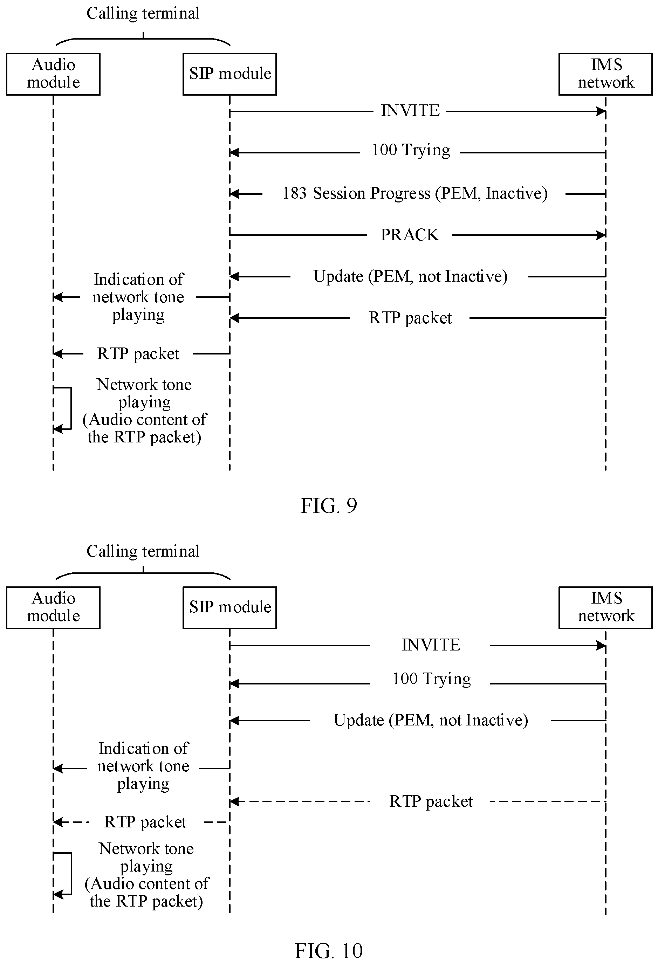

For a specific implementation of this aspect, refer to the following descriptions about FIG. 9 with a use scenario in which a user requirement is the following manner 2.

According to any one of the first aspect or the foregoing implementations of the first aspect, when the ring-back-tone type indicated by the first signaling message indicates the calling terminal to perform local tone playing or when the ring-back-tone type indicated by the third signaling message indicates the calling terminal to perform local tone playing, the method further includes: detecting whether the second signaling message is received; and when the second signaling message is received, determining that the procedure of playing the ring back tone is already triggered currently.

For a specific implementation of this aspect, refer to the following descriptions about a scenario 1.2.

According to any one of the first aspect or the foregoing implementations of the first aspect, when the ring-back-tone type indicated by the first signaling message indicates the calling terminal to perform local tone playing or when the ring-back-tone type indicated by the third signaling message indicates the calling terminal to perform local tone playing, the method further includes: detecting whether the second signaling message is received; and when the second signaling message is received, and the ring-back-tone type indicated by the second signaling message indicates the calling terminal to perform local tone playing, determining that the procedure of playing the ring back tone is already triggered currently; or when the second signaling message is received, and the ring-back-tone type indicated by the second signaling message indicates the calling terminal to perform network tone playing, starting a timer; detecting whether the RTP packet delivered by the network side is received within duration of the timer; and when the RTP packet is received within the duration of the timer, determining that the procedure of playing the ring back tone is already triggered currently.

For a specific implementation of this aspect, refer to the following descriptions about a scenario 1.2a and a scenario 1.2b.

According to any one of the first aspect or the foregoing implementations of the first aspect, the method further includes: when the RTP packet is not received within the duration of the timer, generating a local tone playing indication, to indicate the calling terminal to perform local tone playing, and determining that the procedure of playing the ring back tone is already triggered currently.

For a specific implementation of this aspect, refer to the following descriptions about a scenario 1.2c.

According to any one of the first aspect or the foregoing implementations of the first aspect, the third signaling message is an Update message.

According to any one of the first aspect or the foregoing implementations of the first aspect, the first signaling message is a 183 message or an Update message.

For a specific implementation when the first signaling message is the 183 message, refer to the following descriptions about a scenario 1. For a specific implementation when the first signaling message is the Update message, refer to the following descriptions about a scenario 2.

According to any one of the first aspect or the foregoing implementations of the first aspect, the network side is an IMS network.

According to any one of the first aspect or the foregoing implementations of the first aspect, that the calling terminal initiates a call request to the called terminal again includes: The calling terminal switches from the IMS network to a circuit switched CS network, and initiates the call request to the called terminal again in the CS network; or the calling terminal initiates the call request to the called terminal again in the IMS network.

According to any one of the first aspect or the foregoing implementations of the first aspect, that the calling terminal switches from the IMS network to a circuit switched CS network, and initiates the call request to the called terminal again in the CS network includes: The calling terminal initiates the call request to the called terminal again in the CS network by using Extented Eervice Request signaling.

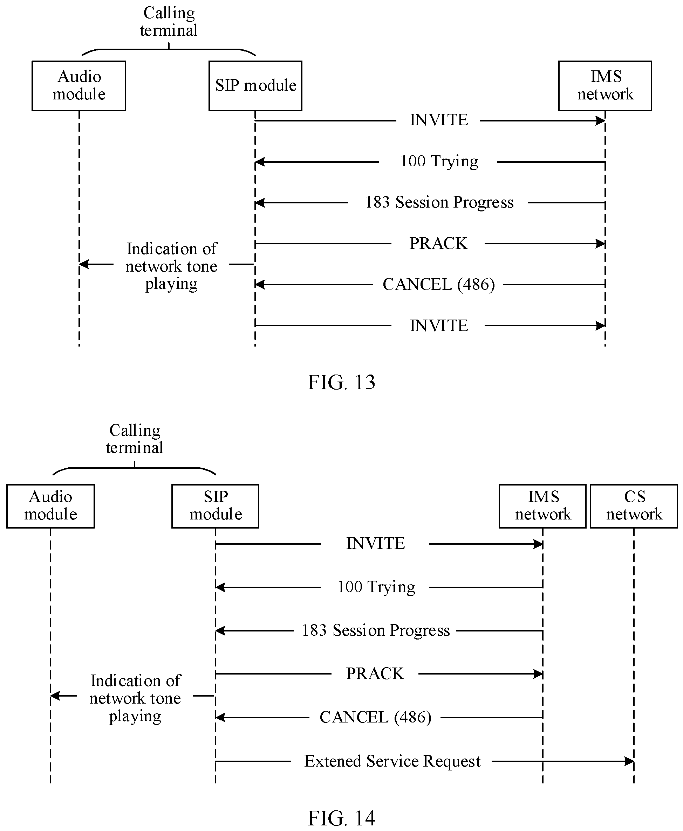

For an implementation in which the calling terminal initiates the call request to the called terminal again in the CS network by using the Extented Eervice Request signaling, join a text part corresponding to FIG. 14.

According to any one of the first aspect or the foregoing implementations of the first aspect, that the calling terminal initiates the call request to the called terminal again in the IMS network includes: The calling terminal initiates the call request to the called terminal again in the IMS network by using INVITE signaling.

For an implementation in which the calling terminal initiates the call request to the called terminal again in the IMS network by using the INVITE signaling, join a text part corresponding to FIG. 13.

According to a second aspect, this application provides a terminal device. The terminal device includes a memory and a processor, and the memory is coupled to the processor. The memory stores computer instructions, and when the computer instructions are executed by the processor, the terminal device is enabled to execute instructions of the method in any one of the first aspect or the possible implementations of the first aspect.

The second aspect and any one of the implementations of the second aspect respectively correspond to the first aspect and any one of the implementations of the first aspect. For technical effects corresponding to any one of the second aspect and the implementations of the second aspect, refer to technical effects corresponding to any one of the first aspect and the implementations of the first aspect. Details are not described herein again.

According to a third aspect, this application provides a computer-readable medium, configured to store a computer program. The computer program includes instructions for performing the method in any one of the first aspect or the possible implementations of the first aspect.

The third aspect and any one of the implementations of the third aspect respectively correspond to the first aspect and any one of the implementations of the first aspect. For technical effects corresponding to any one of the third aspect and the implementations of the third aspect, refer to technical effects corresponding to any one of the first aspect and the implementations of the first aspect. Details are not described herein again.

According to a fourth aspect, this application provides a computer program. The computer program includes instructions for performing the method in any one of the first aspect or the possible implementations of the first aspect.

The fourth aspect and any one of the implementations of the fourth aspect respectively correspond to the first aspect and any one of the implementations of the first aspect. For technical effects corresponding to any one of the fourth aspect and the implementations of the fourth aspect, refer to technical effects corresponding to any one of the first aspect and the implementations of the first aspect. Details are not described herein again.

According to a fifth aspect, this application provides a chip system. The chip system includes a processor, configured to invoke a computer program from a memory and run the computer program, to enable a terminal device in which the chip system is installed to perform the method in any one of the first aspect or the possible implementations of the first aspect.

The fifth aspect and any one of the implementations of the fifth aspect respectively correspond to the first aspect and any one of the implementations of the first aspect. For technical effects corresponding to any one of the fifth aspect and the implementations of the fifth aspect, refer to technical effects corresponding to any one of the first aspect and the implementations of the first aspect. Details are not described herein again.

### BRIEF DESCRIPTION OF DRAWINGS

FIG. 1 is an example schematic diagram of a communication environment in which a terminal device implements a call service;
FIG. 2 is an example schematic diagram of a call processing process;
FIG. 3 is an example schematic diagram of another call processing process;
FIG. 4 is an example schematic diagram of another call processing process;
FIG. 5 is an example schematic diagram of a hardware structure of a terminal device;
FIG. 6 is an example schematic flowchart of a call processing method according to an embodiment of this application;
FIG. 7 is an example schematic diagram of a scenario of determining whether a procedure of playing a ring back tone is already triggered currently;
FIG. 8 is an example schematic diagram of another scenario of determining whether a procedure of playing a ring back tone is already triggered currently;
FIG. 9 is an example schematic diagram of another scenario of determining whether a procedure of playing a ring back tone is already triggered currently;
FIG. 10 is an example schematic diagram of another scenario of determining whether a procedure of playing a ring back tone is already triggered currently;
FIG. 11 is an example schematic flowchart of another call processing method according to an embodiment of this application;
FIG. 12 is an example schematic diagram of a scenario in which call retrying is not performed when a ring-back-tone type is network tone playing;
FIG. 13 is an example schematic diagram of a scenario in which PS trying is performed when a ring-back-tone type is network tone playing;
FIG. 14 is an example schematic diagram of a scenario in which CS trying is performed when a ring-back-tone type is network tone playing;
FIG. 15 is an example schematic diagram of a scenario in which call retrying is not performed when a ring-back-tone type is local tone playing;
FIG. 16 is an example schematic diagram of a scenario in which call retrying is performed when a ring-back-tone type is local tone playing; and
FIG. 17 is an example schematic diagram of a scenario in which call retrying is performed when error code is received before an indication of a ring-back-tone type is received.

### DESCRIPTION OF EMBODIMENTS

The following clearly and completely describes the technical solutions in embodiments of this application with reference to the accompanying drawings in the embodiments of this application. It is clear that the described embodiments are a part but not all of the embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in the embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In the embodiments of this application, the word "exemplary" or "for example" is used to represent giving an example, an illustration, or a description. Any embodiment or design scheme described as an "example" or "for example" in the embodiments of this application should not be explained as being more preferred or having more advantages than another embodiment or design scheme. Specifically, use of the words such as "example" or "for example" is intended to represent a related concept in a specific manner.

In descriptions of the embodiments of this application, unless otherwise stated, "plurality of" means two or more than two. For example, a plurality of processing units mean two or more processing units, and a plurality of systems mean two or more systems.

Before the technical solutions provided in the embodiments of this application are described, SIP signaling messages (an SIP request message and an SIP response) involved in a call service are first described.

The SIP request message involved in this specification is as follows:

INVITE: indicating that a calling user initiates a session request, to invite another user to join a session. Alternatively, INVITE may be used to update a session after a call is established (where in this case, INVITE is also referred to as Re-invite).

ACK: A client confirms, to a server end, that the client already receives a final response to an INVITE request.

Media Session: indicating that a media session is established.

BYE: indicating to end an established call.

Extened Service Request: an extended service request. When the SIP request message "Extened Service Request" is initiated, it indicates that call retrying is initiated in a CS network again, that is, CS retrying described below.

CANCEL: indicating to cancel a request before a final response to the request is received, and having no impact on a completed request.

PRACK: indicating a response acknowledgment message for a response message starting with "1".

Update: an SIP signaling message for updating a session parameter.

The SIP response message involved in this specification is as follows:
200 OK: 200 successful response.

Response information starting with "1" involved in this specification is as follows:
100 Trying: 100 call trying.

183 Session Progress: 183 session progress, indicating a progress of a current call, and can indicate a ring-back-tone type in the SIP request message.

180 Ringing: 180 ringing. 180 Ringing is a response provided after a called party receives an INVITE request message sent by a calling party, to indicate the calling party that a phone is already connected, and a response from the called party is waited for. After receiving the SIP signaling message, the calling party may start to play a ring back tone.

To better understand the technical solutions provided in the embodiments of this application, a communication environment to which the technical solutions provided in the embodiments of this application are applicable is described below.

First, it should be noted that the embodiments of this application are applicable to a 4th generation (4G) mobile communication network architecture, a 5th generation (5G) mobile communication network architecture, or a future network. For ease of description, the following uses a 4G network architecture as an example for description.

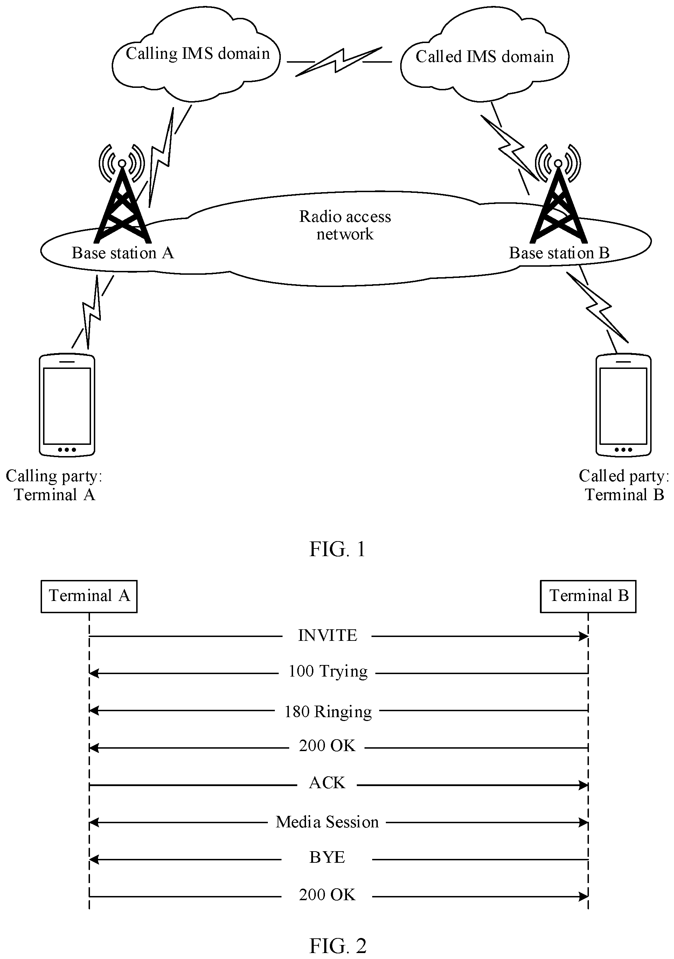

Referring to FIG. 1, a terminal A and a terminal B that need to establish a media session need to access radio access networks by using base stations of cells in which the terminal A and the terminal B are respectively located. For example, the terminal A accesses a radio access network by using a base station A, and the terminal B accesses a radio access network by using a base station B.

Still referring to FIG. 1, for example, when the terminal A serving as a calling party calls the terminal B serving as a called party, that is, when the terminal A initiates a call request to the terminal B, the terminal A transmits the initiated call request to a calling party IMS domain via the accessed radio access network. The calling IMS domain performs corresponding processing on the call request initiated by the terminal A, and forwards a processed call request to a called IMS domain. The called IMS domain performs corresponding processing on the call request processed by the calling IMS domain, and delivers the call request to the terminal B via the base station B corresponding to the terminal B in the radio access network.

Still referring to FIG. 1, for example, in a process of establishing the media session, a response initiated by the terminal B or an indication/instruction delivered by the terminal B for the call request initiated by the terminal A is transmitted to the called IMS domain via the radio access network accessed by the base station B, is then transmitted to the calling IMS domain via the called IMS domain, is then delivered, via the calling IMS domain, to the radio access network accessed by the base station A, and is finally delivered to the terminal A via the radio access network accessed by the base station A.

Therefore, interaction between the calling party and the called party is implemented by using the network architecture shown in FIG. 1.

The foregoing described IMS, to be specific, an IP multimedia subsystem (IP Multimedia Subsystem), is a concept proposed by 3GPP, is a general network architecture that provides a multimedia service in an IP-based network, and can provide a combined multimedia service and an Internet application for users using different access manners. VoLTE and VoNR are currently common voice services in which an IP data transmission technology is used, that is, that are based on the IMS. For ease of description, a scenario in which a call service initiated by a calling party to a called party in the embodiments of this application is a voice service of the VoLTE is used as an example.

In addition, it can be learned from the foregoing descriptions that an IMS domain may include a calling IMS domain and a called IMS domain. The calling IMS domain and the called IMS domain each may include an IMS domain core network and an evolved packet core network (Evolved Paclet Core, EPC). The IMS domain core network may further include a service-call control function (serving-call session control function, S-CSCF), an interrogating-call control function (interrogating-call session control function, I-CSCF), a proxy-call control function (Proxy-call session control function, P-CSCF), a home subscriber server (home subscriber server, HSS), a session border controller (session border controller, SBC), and a plurality of dedicated servers, such as a multimedia telephony application server (multimedia telephony application server, MMTel AS).

Because the foregoing network elements are all corresponding network elements in a wireless communication network in the existing technology, interaction and a service processed between the foregoing network elements are not described in detail in this embodiment. For specific implementation details, refer to an existing protocol document.

It can be learned from the foregoing descriptions of establishing the media session by the terminal A and the terminal B in the communication environment shown in FIG. 1 that, in the process in which the terminal A and the terminal B establish the media session, the radio access networks (the base station A and the base station B) and IMS networks (the calling IMS domain and the called IMS domain) are mainly configured to transmit a request, a response, an instruction, and the like. A procedure of processing a call service between the calling party and the called party may be shown in FIG. 2 while the two network side objects, namely, the radio access networks and the IMS networks, are ignored.

Referring to FIG. 2, for example, when the terminal A needs to establish a media session with the terminal B, as the calling party, the terminal A initiates an INVITE request to the terminal B (the called party).

Correspondingly, after receiving the INVITE request transmitted by the terminal A via the corresponding radio access network and the corresponding IMS network, the terminal B initiates 100 Trying, that is, call trying, to the terminal A. Specifically, if the call trying succeeds, the terminal B initiates a 180 ringing response, that is, 180 Ringing in FIG. 2, to the terminal A.

Still referring to FIG. 2, for example, if the call service continues to be performed normally, the terminal B initiates a 200 OK success response (which is a final response to the INVITE request) to the terminal A. Correspondingly, after receiving the 200 OK initiated by the terminal B, the terminal A sends an ACK response to the terminal B, that is, notifies the terminal B that the terminal A already receives the final response of the terminal B to the INVITE request.

Still referring to FIG. 2, for example, after the terminal A initiates the ACK response to the terminal B, the media session (Media Session) between the terminal A and the terminal B is successfully established. In this case, the terminal A may make a call to the terminal B.

Still referring to FIG. 2, for example, if the terminal B first performs an on-hook operation after the call lasts for a time period, the terminal B initiates a BYE instruction to the terminal A, to end the established call. Correspondingly, after receiving the BYE instruction, the terminal A ends the call with the terminal B, and initiates a 200 OK response, to notify the terminal B that the terminal A already receives the instruction of the terminal B for ending the current session, and ends the session.

It may be understood that the BYE instruction may alternatively be initiated by the terminal A to the terminal B, that is, a calling user first performs an on-hook operation by using the terminal A. Correspondingly, the 200 OK response confirming ending of the current session is initiated by the terminal B.

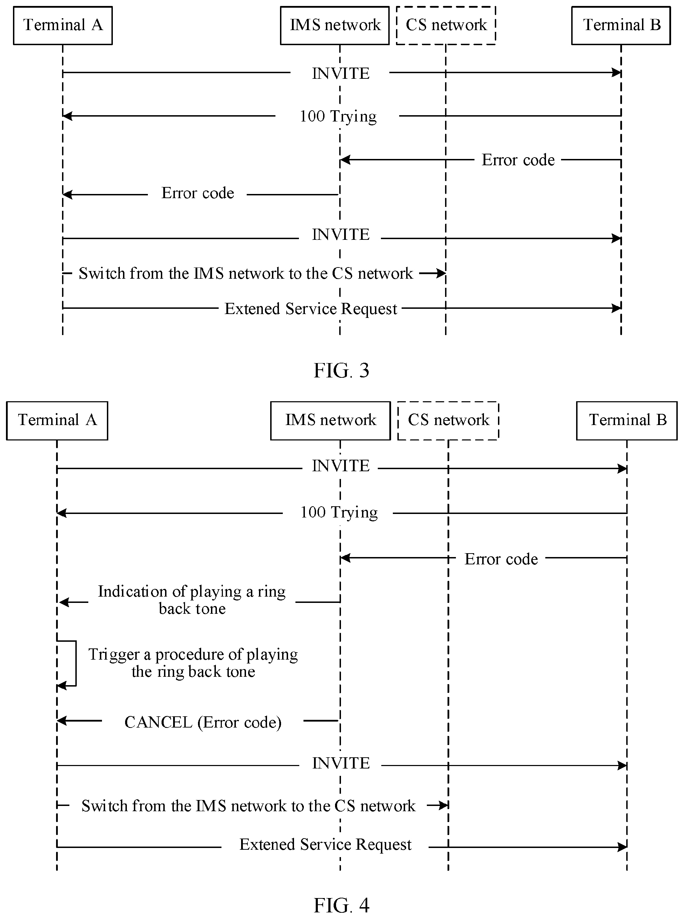

In this way, processing of a normal call service between the terminal A and the terminal B is completed. However, during actual application, in the process in which the media session is established, the media session may not be successfully established due to some reasons. In this case, as shown in FIG. 3, the IMS network (the called IMS domain) delivers an error code reported by the terminal B to the terminal A.

For example, the foregoing error code may be, for example, 400 (a wrong request), 401 (no authorization), 403 (being forbidden), 404 (a user not existing), 408 (a request expiring), 480 (no answering temporarily), 486 (a line being busy), 504 (a server expiring), or 600 (being all busy), which is not listed one by one herein, and is not limited in this embodiment.

It can be learned based on an existing protocol identifier that, before the terminal A receives the 200 OK response (the 1^{st} 200 OK shown in FIG. 2) initiated by the terminal B for the INVITE request, when the terminal A receives the error code delivered by the IMS network, the terminal A stops interacting with the terminal B, and the call service of this time ends as a failure. For example, after the terminal A receives the error code, such as 486 (a line being busy), sent by the IMS network, the INVITE request initiated by the terminal A for the 1^{st} time is canceled, and the terminal A and the terminal B cannot establish the media session.

To improve a voice call completion rate, in some implementations, it may be set that, after receiving the error code delivered by the IMS network, the terminal A automatically triggers call retrying, that is, the terminal A automatically initiates a call request to the terminal B again.

For example, in some implementations, the call request initiated by the terminal A to the terminal B again may be performed in the current IMS network. That is, the terminal A initiates an INVITE request to the terminal B again. The call request initiated in the IMS network again may also be referred to as packet switched (Packet Switched, PS) retrying.

For example, in some other implementations, the call request initiated by the terminal A to the terminal B again may alternatively be circuit switched (Circuit Switched, CS) retrying. For the CS retrying, the terminal A needs to be first switched from the IMS network to a CS network, and then the terminal A initiates the CS retrying, that is, an "Extened Service Request" shown in FIG. 3, to the terminal B via the CS network.

Whether the call retrying triggered by the terminal A after the terminal A receives the error code sent by the IMS network is specifically the PS retrying or the CS retrying may be determined based on a network actually supporting the call service. Specifically, if a currently available network is an IMS network, the call retrying triggered by the terminal Ais the PS retrying. Correspondingly, if the currently available network is a CS network, and the called party subscribes to the VoLTE, the call retrying triggered by the terminal A is the CS retrying.

Therefore, after the calling party receives the error code delivered by the network side, when no user intervenes, the calling party may automatically initiate the call request to the called party again by triggering the PS retrying or the CS retrying. However, during actual application, the terminal A plays a ring back tone based on a progress of the current media session, to remind a user of the current progress. Therefore, as shown in FIG. 4, if the terminal A receives the error code (such as the CANCEL message) delivered by the IMS network, a procedure of playing the ring back tone is already triggered. In this case, the terminal A already starts to play the ring back tone, that is, the user can already hear the ring back tone played by the terminal A, and learn that this call is abnormal. In this case, if the terminal A automatically triggers the CS retrying or the PC retrying, confusion is caused to the user.

In view of this, an embodiment of this application an embodiment provides a call processing method, to prevent a calling terminal from still performing an operation of call retrying after performing an operation of playing a ring back tone, so that use confusion caused to a user when the calling terminal still tries to call when the user already senses that this call is abnormal is avoided.

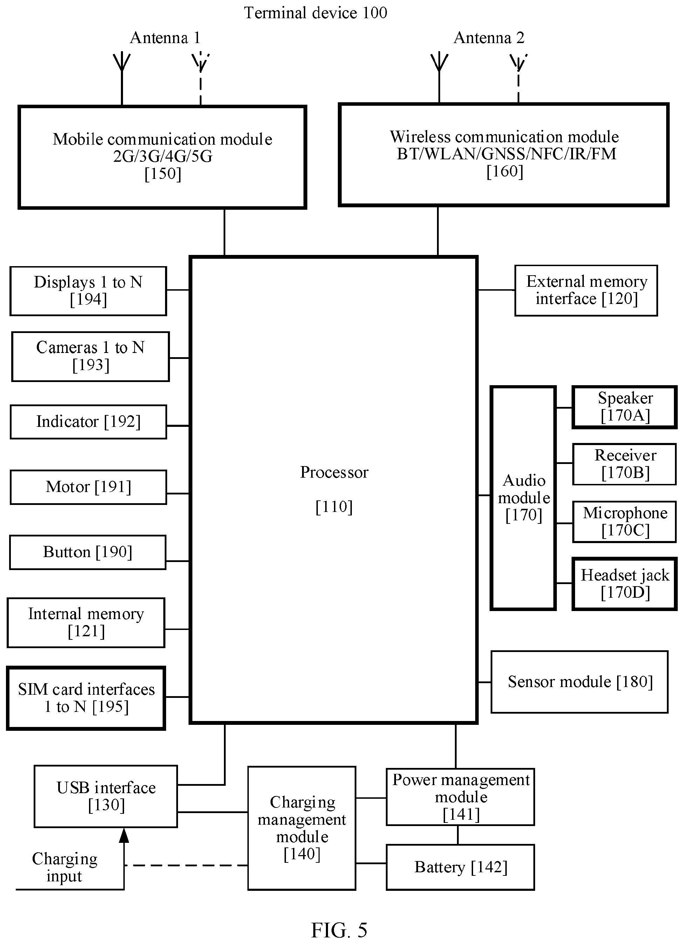

To better understand the call processing method provided in this embodiment of this application, a hardware structure of a terminal device to which the method is applicable is first described below with reference to FIG. 5.

FIG. 5 is an example schematic diagram of a hardware structure of a terminal device 100 implementing the call processing method provided in this embodiment of this application.

It should be noted that the terminal device may also be expressed as user equipment (User Equipment, UE). Specifically, in this embodiment, the terminal device refers to a user registering with an IMS network, and may include a mobile terminal, a fixed terminal, an SIP soft terminal, or the like.

The SIP refers to a session initialization protocol (Session initialization Protocol). The SIP is a multimedia communication protocol formulated by the Internet engineering task force (Internet Engineering Task Force, IETF). The SIP is a text-based application-layer control protocol, and is used to create, modify, and release a session of one or more participants.

It should be understood that the foregoing descriptions are merely examples listed for a better understanding of the technical solutions of this embodiment, and are not considered as a unique limitation on this embodiment.

For ease of description, in this embodiment, the hardware structure of the terminal device 100 is described by using a mobile terminal, such as a mobile phone, as an example.

Referring to FIG. 5, for example, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 17047D, a sensor module 180, a button 190, a motor 191, an indicator 192, a camera 193, a display 194, a subscriber identification module (subscriber identification module, SIM) card interface 195, and the like.

The antenna 1 and the antenna 2 are configured to transmit and receive an electromagnetic wave signal. Each antenna in the terminal device 100 may be configured to cover one or more communication frequency bands. Different antennas may further be multiplexed, to improve antenna utilization. For example, the antenna 1 may be multiplexed as a diversity antenna of a wireless local area network. In some other embodiments, the antenna may be used in combination with a tuning switch.

It should be noted that, specifically, in the embodiments of this application, an INVITE request, 200 OK, a CS retrying request, a PS retrying request, a PRACK acknowledgment request message 100 Trying, a 183 response, Update signaling, an RTP packet, and the like that are sent or received by the terminal device 100 are all implemented by using the antenna 1 or the antenna 2.

Still referring to FIG. 5, for example, the mobile communication module 150 may provide a solution that includes wireless communication such as 2G/3G/4G/5G and that is applied to the terminal device 100. The mobile communication module 150 may include at least one filter, a switch, a power amplifier, a low noise amplifier (low noise amplifier, LNA), and the like. The wireless communication module 160 may provide solutions for wireless communication applied to the terminal device 100 and including wireless local area networks (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and infrared (infrared, IR).

For example, in some implementations, in the terminal device 100, the antenna 1 and the mobile communication module 150 are coupled, and the antenna 2 and the wireless communication module 160 are coupled, so that the terminal device 100 can communicate with a network and another device by using a wireless communication technology.

Still referring to FIG. 5, for example, the audio module 170 of the terminal device 100 includes the speaker 170A, the receiver 170B, the microphone 170C, and the headset jack 170D.

For example, the terminal device 100 can implement an audio function, for example, music playback, recording, and the call service in the embodiments of this application, by using the audio module 170, the speaker 170A, the receiver 170B, the microphone 170C, the headset jack 170D, an application processor, and the like.

Specifically, in this embodiment, the ring back tone is played by using the audio module 170. For example, in some implementations, for example, in a scenario in which a wired headset is accessed through the headset jack 170D, or a Bluetooth earphone is accessed through the Bluetooth, the ring back tone is specifically played by using a currently accessed earphone.

For example, in some other implementations, for example, when an earphone (a wired headset or a Bluetooth earphone) is not accessed, the ring back tone is played by using the speaker 170A.

It should be understood that the foregoing descriptions are merely examples listed for a better understanding of the technical solutions of this embodiment, and are not considered as a unique limitation on this embodiment.

In addition, in some embodiments, the sensor module 180 in the terminal device 100 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like. Examples are not listed one by one herein. This is not limited in this embodiment of this application.

In addition, it should be noted that, in some implementations, the processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU).

It may be understood that, during actual implementation, different processing units may be independent components, or may be integrated into one or more processors.

In addition, it should be further noted that, in some implementations, the controller may be a nerve center and a command center of the terminal device 100. During actual application, the controller may generate an operation control signal based on an instruction operation code and a time sequence signal, to complete control of instruction reading and instruction execution.

In addition, it should be further noted that, in some implementations, a memory may be further disposed in the processor 110, and is configured to store instructions and data. In some implementations, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In addition, it should be further noted that, in some implementations, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

Still referring to FIG. 5, for example, the charging management module 140 is configured to receive charging input from a charger. The charger may be a wireless charger or a wired charger. In some implementations of wired charging, the charging management module 140 may receive a charging input of a wired charger through the USB interface 130. In some implementations of wireless charging, the charging management module 140 may receive a wireless charging input through a wireless charging coil of the terminal device 100. When charging the battery 142, the charging management module 140 may further supply power to the terminal device by using the power management module 141.

Still referring to FIG. 5, for example, the power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other implementations, the power management module 141 may alternatively be disposed in the processor 110. In some other implementations, the power management module 141 and the charge management module 140 may alternatively be disposed in a same device.

Still referring to FIG. 5, for example, a wireless communication function of the terminal device 100 may be implemented by using the antenna 1, the antenna 2, the mobile communication module 150, the wireless communication module 160, the modem processor, the baseband processor, and the like.

In addition, the terminal device 100 shown in FIG. 5 implements a display function by means of the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is specifically configured to display an image, a video, and the like. The display 194 includes a display panel. In some embodiments, the terminal device 100 may include one or N displays 194, where N is a positive integer greater than 1.

In addition, the terminal device 100 can implement a photographing function by using the ISP, the camera 193, the video codec, the GPU, the display 194, the application processor, and the like.

The camera 193 is configured to capture a static image or a video. In some embodiments, the terminal device 100 may include one or N cameras 193, where N is a positive integer greater than 1.

In addition, the external memory interface 120 shown in FIG. 5 may be configured to be connected to an external storage card such as a Micro SD card, to extend a storage capability of the terminal device 100. The external storage card communicates with the processor 110 through the external memory interface 120, to implement a data storage function. For example, files such as music and videos are stored in the external storage card.

In addition, the internal memory 121 shown in FIG. 5 may be configured to store computer-executable program code. The executable program code includes instructions. The processor 110 runs the instructions stored in the internal memory 121, to perform various functional applications and data processing of the terminal device 100.

Specifically, in the technical solutions provided in this embodiment of this application, a local ring tone and related instructions for implementing a call processing method are pre-stored in the internal memory 121, and the processor 110 executes the instructions stored in the internal memory 121, to enable the terminal device 100 to execute the call processing method provided in the embodiments of this application.

Still referring to FIG. 5, for example, the key 190 includes a power key, a volume key, and the like. The button 190 may be a mechanical button, or may be a touch button. The terminal device 100 may receive a key input, and generate a key signal input related to user setting and function control of the terminal device 100.

Still referring to FIG. 5, for example, the motor 191 may generate a vibration prompt. The motor 191 may be configured to provide an incoming call vibration prompt and a touch vibration feedback. For example, touch operations performed on different applications (for example, photo taking and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

Still referring to FIG. 5, for example, the indicator 192 may be an indicator light, may be configured to indicate a charging status or a battery change, and may be further configured to indicate a message, a missed call, a notification, and the like.

Still referring to FIG. 5, for example, the SIM card interface 195 is configured to connect to a SIM card or a USIM card. The SIM card may be inserted into the SIM card interface 195 or unplugged from the SIM card interface 195, to come into contact with or be separated from the terminal device 100. The terminal device 100 may support one or N (where N is an integer greater than 1) SIM card interfaces 195. That is, a plurality of SIM cards or USIM cards may be inserted into the terminal. Specifically, in the technical solutions provided in this embodiment, VoLTE is implemented based on the SIM card or the USIM card.

Introduction to the hardware structure of the terminal device 100 concludes. It should be understood that the terminal device 100 shown in FIG. 5 is merely an example. During specific implementation, the terminal device 100 may have more or fewer components than those shown in the figure, may combine two or more components, or may have a different component configuration. Various components shown in FIG. 5 may be implemented in hardware including one or more signal processing circuits and/or application-specific integrated circuits, software, or a combination of hardware and software.

Using the terminal device having the hardware structure shown in FIG. 5 as an example, for the communication environment shown in FIG. 1, a procedure in which the terminal device implements the call processing method provided in this application is specifically described.

It should be noted that a call service needs to be implemented based on processing of a Modem protocol stack. Therefore, when the call processing method provided in the embodiments of this application is implemented, a policy and processing logic followed by the terminal device may be set in the Modem protocol stack in a form of a control point. That is, in the call processing method provided in the following embodiments, operations performed by a calling terminal (such as a terminal A) and a called terminal (such as a terminal B) are all completed in the Modem protocol stack.

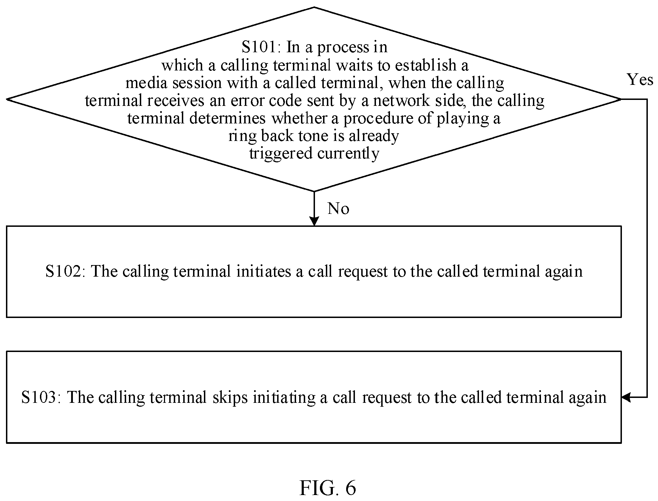

Referring to FIG. 6, a call processing method provided in an embodiment of this application specifically includes the following steps.

S101: In a process in which a calling terminal waits to establish a media session with a called terminal, when the calling terminal receives an error code sent by a network side, the calling terminal determines whether a procedure of playing a ring back tone is already triggered currently.

Specifically, in the call processing method provided in this embodiment, to avoid a case in which the calling terminal simultaneously performs an operation of playing the ring back tone and an operation of triggering call retrying, and consequently causes confusion to use of a user, before the calling terminal receives the error code (where a CANCEL message is subsequently used as an example) sent by the network side and triggers call retrying, the calling terminal may first determine whether the procedure of playing the ring back tone is already triggered currently, that is, whether the calling terminal already plays the ring back tone.

Correspondingly, through determining, if the calling terminal determines that the procedure of playing the ring back tone is not triggered currently, the calling terminal may perform call retrying, that is, perform step S102. On the contrary, the calling terminal does not perform call retrying, that is, performs step S103.

The network side described in step S101 is, for example, an IMS network. It can be learned from the foregoing descriptions of the communication environment shown in FIG. 1 that the IMS network may include a calling IMS domain and a called IMS domain. The CANCEL message is mainly sent, by the called IMS domain when the called terminal cannot answer this call, that is, cannot establish the media session, to the calling terminal based on the error code provided by the called terminal. Therefore, the CANCEL message sent by the network side is specifically sent by the called IMS domain to the calling IMS domain, and then is delivered by the calling IMS domain to the calling terminal via a base station (for example, the base station A) of a radio access network to which the calling terminal accesses.

Processing logic of determining whether the procedure of playing the ring back tone is already triggered currently may be, for example, performing determining based on content, a network transmission protocol packet, or the like carried in a signaling message that is delivered by the network side and that can indicate the calling terminal to play the ring back tone.

For example, the signaling message that is delivered by the network side and that can indicate the calling terminal to play the ring back tone may be, for example, a 183 Session Progress (which is subsequently referred to as a 183 message for short), an Update message, or 180 Ringing (which is subsequently referred to as a 180 message for short).

For example, the content that indicates the calling terminal to play the ring back tone and that is carried in the signaling message such as the 183 message, the Update message, or the 180 message is, for example, a P-Early-Media (P-Early-Media, PEM) header field.

In addition, it should be noted that the ring back tone (RING BACK TONE, RBT; or CALL BACK TONE, CBT) is a ring tone played in the calling terminal when the calling terminal dials the called terminal. Playing rules of the ring back tone are different in different IMS domains. For example, in a fixed-network IMS domain, that is, the foregoing IMS domain core network, the ring back tone is usually provided by the network side. In a VoLTE domain, that is, the foregoing evolved packet core network, the ring back tone is usually local to the calling terminal.

In other words, playing of the ring back tone may be classified into playing of a local ring back tone (local tone playing) and playing of a network ring back tone (network tone playing). Based on this, when a type of the ring back tone played by the calling terminal is determined based on the PEM header field carried in the 183 message, the Update message, or the 180 message, standards that may be complied with are shown, for example, in Table 1 and Table 2.

**Table 1 Table of ring-back-tone types determined based on a 183 message**

| | | | |
|---|---|---|---|
| 183 message | A PEM header field is carried | PEM header field = Inactive | Local tone playing |
| | | PEM header field ≠ Inactive | Network tone playing |
| | No PEM header field is carried | | Network tone playing |

**Table 2 Table of ring-back-tone types determined not based on a 183 message**

| | | | | |
|---|---|---|---|---|
| A network side supports resource reservation | Update message/180 message | A PEM header field is carried, and playing of a previously determined ring back tone has not taken effect | PEM header field = Inactive | Local tone playing |
| | | | PEM header field ≠ Inactive | Network tone playing |
| | | No PEM header field is carried | | Remain the previously determined ring-back-tone type |
| The network side does not support resource reservation | Update message/180 message | A PEM header field is carri ed | PEM header field = Inactive | Local tone playing |
| | | | PEM header field ≠ Inactive | Network tone playing |
| | | No PEM header field is carried | | Network tone playing |

It can be learned from Table 1 that, for the 183 message, when the 183 message carries the PEM header field, and the PEM header field = Inactive, the indicated ring-back-tone type is local tone playing, to be specific, an audio file corresponding to the ring back tone is provided by the calling terminal.

Still referring to Table 1, for the 183 message, when the 183 message carries no PEM header field, or the 183 message carries the PEM header field, but the PEM header field ≠ Inactive, the indicated ring-back-tone type is network tone playing, to be specific, an audio file corresponding to the ring back tone is provided by the network side.

For example, the audio file provided by the network side during network tone playing, that is, the foregoing network transmission protocol packet, may be an RTP (Real-time Transport Protocol) packet.

It can be learned from Table 2 that, in a scenario in which the network side supports resource reservation, that is, the 183 message can be used as a ring-back-tone indication, when the Update message and the 180 message carry the PEM header field, and playing of the previously determined ring back tone has not taken effect, for example, when the ring back tone determined based on the 183 message has not started to be played, and when the PEM header field = Inactive, the indicated ring-back-tone type is local tone playing; or when the PEM header field ≠ Inactive, the indicated ring-back-tone type is network tone playing.

Still referring to Table 2, when the network side supports resource reservation, and when the Update message and the 180 message do not carry the PEM header field, the previously determined ring-back-tone type is remained. If network tone playing is determined based on the 183 message, network tone playing is remained in this scenario. If local tone playing is determined based on the 183 message, local tone playing is remained in this scenario.

Still referring to Table 2, in a scenario in which the network side does not support resource reservation, that is, the 183 message cannot be used as a ring-back-tone indication, when the Update message and the 180 message carry the PEM header field, and when the PEM header field = Inactive, the indicated ring-back-tone type is local tone playing; or when the PEM header field ≠ Inactive, the indicated ring-back-tone type is network tone playing.

Still referring to Table 2, in a scenario in which the network side does not support resource reservation, that is, the 183 message cannot be used as a ring-back-tone indication, when the Update message and the 180 message do not carry the PEM header field, the indicated ring-back-tone type is network tone playing.

In addition, it should be noted that, for a scenario in which the ring back tone is local tone playing, the calling terminal needs to actually start playing the tone, that is, trigger the procedure of playing the ring back tone, only after receiving the 180 message and when the 180 message also indicates the local tone playing. However, for a scenario in which the ring back tone is network tone playing, in an implementation, the procedure of playing the ring back tone may be triggered without relying on the 180 message. For example, before the 180 message is received, an RTP packet corresponding to the network tone playing is already received. In this case, the calling terminal does not pay attention to a ring-back-tone indication of the 180 message. In another implementation, for example, in a case in which the calling terminal still does not receive the RPT packet when receiving the 180 message, the calling terminal needs to pay attention to a ring-back-tone indication of the 180 message. For specific processing logic, refer to descriptions of several scenarios provided below.

In addition, it should be further noted that, when it is determined that the ring-back-tone type is network tone playing, in an implementation, it may be directly determined that the calling terminal triggers the procedure of playing the ring back tone. In another implementation, after the calling terminal receives the RTP packet, it may be actually determined that the calling terminal triggers the procedure of playing the ring back tone.

Based on this, the calling terminal determines whether the ring back tone is local tone playing or network tone playing, and then may determine, based on conditions followed by the local tone playing and the network tone playing, whether the calling terminal currently triggers the procedure of playing the ring back tone.

S102: The calling terminal initiates a call request to the called terminal again.

Specifically, after the calling terminal receives the CANCEL message delivered by the IMS network, if it is determined, through the foregoing determining, that the procedure of playing the ring back tone is not triggered currently, the calling terminal may initiate the call request to the called terminal again, that is, trigger a procedure of call retrying.

It should be noted that the call retrying in this embodiment may be, for example, the foregoing PS retrying (which may be specifically implemented by using "INVITE" signaling) performed in the IMS network, or may be the CS retrying (which may be specifically implemented by using "Extened Service Request" signaling) performed in a CS network. For selection and specific implementations of the PS retrying and the CS retrying, refer to the foregoing descriptions, and details are not described herein again.

S103: The calling terminal skips initiating a call request to the called terminal again.

Specifically, after the calling terminal receives the CANCEL message delivered by the IMS network, if it is determined, through the foregoing determining, that the procedure of playing the ring back tone is already triggered currently, the calling terminal skips initiating the call request to the called terminal again.

It should be noted that, in this embodiment, that the calling terminal skips initiating the call request to the called terminal again when the calling terminal already triggers the procedure of playing the ring back tone specifically refers to that the calling terminal does not automatically perform PS retrying or CS retrying. If a calling user dials a called number again after triggering an on-hook operation, the calling terminal may continue to initiate a call request to the called terminal.

Therefore, a precondition of triggering call retrying is set, to be specific, whether the calling terminal currently does not trigger the procedure of playing the ring back tone is determined, so that the call retrying is triggered only when it is determined that the procedure of playing the ring back tone is not triggered currently, and the calling terminal skips initiating a call request to the called terminal again when the procedure of playing the ring back tone is already triggered currently. Therefore, a case in which the calling terminal still tries to call when the calling terminal already plays the ring back tone, that is, a user already senses that this call is abnormal, and use confusion is caused to the user, is avoided.

To better understand an operation of determining, by the calling terminal, whether the procedure of playing the ring back tone is already triggered currently, several specific scenarios are used for description below.

Before the operation of determining whether the procedure of playing the ring back tone is already triggered currently is described, a specific object performing the operation in the calling terminal is first described. It can be learned from the foregoing descriptions that the call service needs to be implemented based on the processing of the Modem protocol stack, and is specifically implemented in a session initiation protocol module (SIP) in the Modem protocol stack. It may be understood that, in the Modem protocol stack, the SIP module is specifically located at an IMS protocol layer. The IMS protocol layer is located at a non-access layer (an NAS protocol layer) of the Modem protocol stack.

In addition, it can be learned based on the foregoing descriptions of the hardware structure of the terminal device that the ring back tone is specifically played by using the audio module. Based on this, in the following descriptions of scenarios, functional modules included by the calling terminal mainly include the audio module and the SIP. In addition, because the operation of determining whether the procedure of playing the ring back tone is already triggered currently is mainly an operation performed after the calling terminal receives the error code sent by the network side (the IMS network), an object that is shown in the accompanying drawings and that interacts with the calling terminal is the IMS network, and other objects involved in the call service, such as a base station and the called terminal, are not shown.

For a specific structure of the Modem protocol stack and a function that can be implemented by each layer, specifically refer to a standard file of the Modem protocol stack, and details are not described herein.

Scenario 1: The network side supports resource reservation (where the 183 message can be used as a ring-back-tone indication).

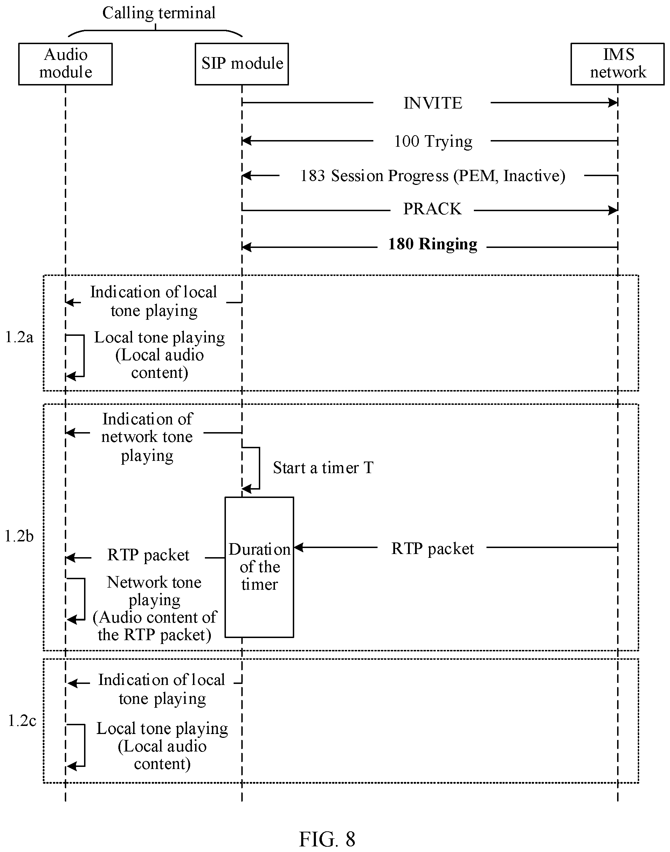

For example, in some implementations, as shown in FIG. 7 and FIG. 8, when the calling terminal needs to perform the call service with the called terminal, the SIP module in the calling terminal initiates an INVITE request. After the INVITE request is transmitted to the IMS network, the IMS network forwards the INVITE request to the called terminal to be called.

Still referring to FIG. 7 and FIG. 8, for example, the IMS network also feeds back, to the calling terminal, 100 Trying that is initiated by the called terminal for the INVITE request.

Still referring to FIG. 7 and FIG. 8, for example, after the calling terminal initiates the INVITE request, in a process in which the calling terminal waits to establish the media session with the called terminal, the IMS network feeds back a session progress response of the call service to the SIM module of the calling terminal based on an actual call service progress, and initiates a ring-back-tone indication. For a scenario in which the network side supports resource reservation, the IMS network generates, based on status information that identifies a current session progress and that is fed back by the called terminal, such as the error code or response information, a 183 message that can indicate the ring back tone, and sends the 183 message to the calling terminal, to notify the calling terminal of the current progress and a ring-back-tone indication. In this way, the calling terminal makes a corresponding feedback based on the 183 message. For example, the calling terminal plays a corresponding ring back tone, so that a user learns the current session progress, to improve user experience.

It can be learned from the foregoing descriptions of the signaling message and the RTP packet that are for determining that the calling terminal plays the ring back tone that the 183 message may be used to indicate a ring-back-tone type. Therefore, after receiving the 183 message delivered by the IMS network, the SIP module of the calling terminal may perform the foregoing operation of determining whether the procedure of playing the ring back tone is already triggered currently.

In addition, it can be learned from the foregoing descriptions that the ring back tone that can be indicated by the 183 message may be classified into network tone playing or local tone playing. Scenarios of the two ring-back-tone types are specifically described below.

Scenario 1.1: The 183 message indicates network tone playing, and between the 183 message and the 180 message, the calling terminal does not receive another signaling message that indicates the ring back tone.

For example, when the 183 message delivered by the IMS network does not carry the PEM header field, or as shown in "183 Session Progress (PEM, not Inactive)" in FIG. 7, that is, when the 183 message carries the PEM header field, and the PEM header field ≠ Inactive, it can be learned based on the standard shown in Table 1 that, in the scenario shown in FIG. 7, the ring-back-tone type determined by the SIP module based on the 183 message is network tone playing.

For example, when the ring-back-tone type is the network tone playing, in an implementation, the calling terminal may directly determine, without considering whether the RTP packet sent by the IMS network is received, that the procedure of playing the ring back tone is already triggered currently (where this manner is subsequently referred to as a manner 1).

For example, in another implementation, after the 183 message indicates the network tone playing (where the 183 message does not carry the PEM header field, or carries the PEM header field that is not inactive), the calling terminal needs to further detect the RTP packet corresponding to the network ring back tone. Only when receiving the RTP packet, the calling terminal determines that the procedure of playing the ring back tone is already triggered currently (where this manner is subsequently referred to as a manner 2).

Specifically, during actual application, to facilitate the calling terminal to determine whether to trigger call retrying, a reference identifier may be introduced. Different values are set for the reference identifier, to identify whether the calling terminal already currently triggers the procedure of playing the ring back tone.

For example, when the reference identifier is set to a first value (such as 1 or true), it indicates that the calling terminal currently does not trigger the procedure of playing the ring back tone. When the reference identifier is set to a second value (such as 0 or false), it indicates that the calling terminal already currently triggers the procedure of playing the ring back tone.

In other words, when receiving the error code sent by the IMS network, the calling terminal first reads a value corresponding to the reference identifier. When the reference identifier is the first value, call retrying is triggered. Correspondingly, when the reference identifier is the second value, call retrying is not triggered.

In addition, it should be further noted that, for the set reference identifier, an initial value of the reference identifier may be set to the first value as required. To be specific, before no signaling message or RTP packet that can indicate a ring-back-tone type is received, the reference identifier is the first value by default. In this case, if the error code delivered by the IMS network is received, the calling terminal may directly trigger call retrying.

Based on this, in a use scenario in which a user requirement is the manner 1, when the SIP module determines, based on the 183 message, that the ring-back-tone type is the network tone playing, the SIP module may directly update the reference identifier to the second value.

For example, in another implementation, for example, in a use scenario in which a user requirement is the manner 2, when the SIP module determines, based on the 183 message, that the ring-back-tone type is the network tone playing, and when the RTP packet is not received, the value of the reference identifier is not updated, that is, the reference identifier continues to remain at the first value. After the SIP module receives the RTP, the reference identifier is updated from the first value to the second value.

It should be understood that the foregoing descriptions are merely examples listed for a better understanding of the technical solutions of this embodiment, and are not considered as a unique limitation on this embodiment.

In addition, it should be noted that, in the use scenario of the manner 2, only after receiving the RTP packet, the calling terminal considers that the procedure of playing the ring back tone is already triggered currently, and updates the reference identifier from the first value to the second value. Therefore, when receiving the 180 message, the calling terminal may have not received the RTP packet, that is, the calling terminal has not played the tone. Therefore, for the use scenario of the manner 2, whether the calling terminal currently triggers the procedure of playing the ring back tone may be further determined with reference to the 180 message.

Still referring to FIG. 7, for example, in the scenario 1.1, the use scenario of the manner 2 may be classified into three specific implementation scenarios: a scenario 1.1a, a scenario 1.1b, and a scenario 1.1c.

### Scenario 1.1a:

For example, after the calling terminal determines, based on the 183 message, that the ring-back-tone type is the network tone playing, if the calling terminal receives the RTP packet before receiving the 180 message, that is, the reference identifier is already updated from the first value to the second value, and the calling terminal already plays the ring back tone, the calling terminal does not need to pay attention to the 180 message. In this case, the calling terminal may directly determine that the procedure of playing the ring back tone is already triggered currently, and the ring-back-tone indication initiated by 180 does not need to be considered to determine whether the procedure of playing the ring back tone is triggered currently.

### Scenario 1.1b:

For example, after the calling terminal determines, based on the 183 message, that the ring-back-tone type is the network tone playing, if the calling terminal has not received, when receiving the 180 message, the RTP packet corresponding to the network ring back tone, that is, the calling terminal has not played the ring back tone, in the scenario 1.1b, the calling terminal may determine, based on content of the 180 message, whether the ring-back-tone type changes, and further determine, based on the ring-back-tone type indicated by the 180 message, whether the procedure of playing the ring back tone is already triggered currently.

For example, when the 180 message does not carry the PEM header field, or as shown in "180 Ringing (PEM, not Inactive)" in FIG. 7, that is, when the 180 message carries the PEM header field, and the PEM header field ≠ Inactive, it can be learned, based on the standard corresponding to the 180 message when the network side supports resource reservation as shown in Table 2, that the ring-back-tone type determined by the SIP model based on the 180 message in the scenario 1.1b is network tone playing.

For example, a signaling message before the 180 message, such as the 183 message, or another signaling message that can initiate a ring-back-tone indication, such as the Update message, indicates that the ring-back-tone type is the network tone playing. When receiving the 180 message, the calling terminal does not perform network tone playing. To be specific, in a scenario in which the RTP packet is received, when the 180 message indicates the network tone playing, and in a use scenario in which a user requirement is the manner 1, the reference identifier may be directly updated from the first value to the second value, that is, it is determined that playing of the ring back tone is already triggered currently by the calling terminal.

In another implementation, for example, in a use scenario in which a user requirement is the manner 2, as shown in FIG. 7, a timer may be started. Correspondingly, if the SIP module receives, within duration of the timer, the RTP packet delivered by the network side, the SIP module sends the RTP packet to the audio module, so that the audio module can play audio content in the RTP packet, and start network tone playing.

In other words, within the duration of the timer, if the calling terminal does not receive the RTP packet, the reference identifier remains at the first value. In this period, if receiving the error code delivered by the network side, the calling terminal determines that the procedure of playing the ring back tone is not triggered currently, and performs step S102.

Correspondingly, if the calling terminal receives the RTP packet within the duration of the timer, when determining that the RTP packet is received, the SIP module updates the reference identifier from the first value to the second value. In this way, after the reference identifier is updated to the second value, when receiving the error code delivered by the network side, the calling terminal determines that the procedure of playing the ring back tone is already triggered currently, and performs step S103.

### Scenario 1.1c:

For example, on the basis of the scenario 1.1b, if the SIP module of the calling terminal does not receive, within the duration of the timer, the RTP packet delivered by the network side, to ensure that the calling terminal can always play the ring back tone, and further ensure user experience, in this case, the SIP module may directly deliver an indication of local tone playing to the audio module, so that the audio module can locally obtain audio content from the calling terminal and start local tone playing. In addition, the SIP module updates the reference identifier from the first value to the second value.

In other words, when no RTP packet is received within the duration of the timer, after the timer expires, the SIP module may update the reference identifier from the first value to the second value. In this way, after the reference identifier is updated to the second value, when receiving the error code delivered by the network side, the calling terminal determines that the procedure of playing the ring back tone is already triggered currently, and performs step S103.

In addition, it should be noted that, if the 180 message indicates the local tone playing, the SIP module may directly deliver the indication of the local tone playing to the audio module, so that the audio module can locally obtain the audio content from the calling terminal and start local tone playing.

Therefore, when the network side supports resource reservation, and the 183 message indicates the network tone playing, it can be quickly and precisely determined, according to the manners of adjusting the value of the reference identifier and the correspondence between different values of the reference identifier and the procedure of playing the ring back tone that are shown in the scenarios 1.1a, 1.1b, and 1.1c, whether the procedure of playing the ring back tone is already triggered when the calling terminal receives the error code in the use scenarios of different user requirements, and then the calling terminal is controlled, based on a determining result, to perform PS retrying or CS retrying.

In addition, it should be further noted that, during actual application, the calling terminal may be directly set, based on a user requirement, to determine, when receiving the 183 message, that the procedure of playing the ring back tone is already triggered currently. To be specific, the calling terminal does not pay attention to the ring-back-tone type indicated by the 183 message, and directly considers that the procedure of playing the ring back tone is already triggered currently, regardless of whether the ring-back-tone type indicated by the 183 message is the network tone playing or the local tone playing. Therefore, the calling terminal can be directly prevented from initiating the call request to the called terminal again.

It should be understood that the foregoing descriptions are merely examples listed for a better understanding of the technical solutions of this embodiment, and are not considered as a unique limitation on this embodiment.

Scenario 1.2: The 183 message indicates local tone playing, and between the 183 message and the 180 message, the calling terminal does not receive another signaling message that indicates the ring back tone.

For example, when the 183 message delivered by the IMS network is "183 Session Progress (PEM, Inactive)" shown in FIG. 8, that is, when the 183 message carries the PEM header field, and the PEM header field = Inactive, it can be learned based on the standard shown in Table 1 that, in the scenario shown in FIG. 8, the ring-back-tone type determined by the SIP module based on the 183 message is local tone playing.

It can be learned from the foregoing descriptions that, for the local tone playing, the calling terminal needs to start to play the ring back tone only when the calling terminal receives the 180 message and the ring-back-tone type indicated by the 180 message is still the local tone playing, that is, the 180 message does not carry the PEM header field, or carries the PEM header field that is inactive. Therefore, when the ring-back-tone type is the local tone playing, before the calling terminal receives the 180 message, the value of the reference identifier may remain at the first value.

In addition, it can be learned from the foregoing descriptions of the 180 message that the 180 message may alternatively initiate a ring-back-tone indication, that is, a determined ring-back-tone type may be modified based on content of the 180 message. Therefore, when the 183 message indicates the local tone playing, before the 183 message and after the 180 message, when the calling terminal does not receive another signaling message that can initiate the ring back tone, whether the calling terminal performs local tone playing needs to be further determined with reference to the 180 message. To be specific, for the local tone playing, whether the calling terminal currently triggers the procedure of playing the ring back tone needs to be determined based on the 180 message.

Still referring to FIG. 8, for example, the scenario 1.2 may be classified into three specific implementation scenarios: a scenario 1.2a, a scenario 1.2b, and a scenario 1.2c.

### Scenario 1.2a:

For example, after the calling terminal determines, based on the 183 message, that the ring-back-tone type is the local tone playing, if the calling terminal does not receive, before receiving the 180 message, another signaling message indicating a ring-back-tone type, the reference identifier may always remain at the first value in this period.

Still referring to FIG. 8, for example, when the ring-back-tone type is always the local tone playing, when receiving the 180 message, the calling terminal may determine, based on content of the 180 message, whether the ring-back-tone type changes, and further determine, based on the ring-back-tone type indicated by the 180 message, whether the procedure of playing the ring back tone is already triggered currently.

For example, when the 180 message does not carry the PEM header field, or carries the PEM header field that is inactive (where the ring-back-tone type is still the local tone playing), the SIP module delivers an indication of local tone playing to the audio module, so that the audio module can locally obtain audio content from the calling terminal and start local tone playing. In addition, the SIP module also updates the reference identifier from the first value to the second value.

In other words, if the calling terminal receives the error code delivered by the network side in the scenario 1.2a, because the reference identifier is the second value, the calling terminal determines that the procedure of playing the ring back tone is already triggered currently, and performs step S103.

### Scenario 1.2b:

For example, when the 180 message carries the PEM header field that is not inactive, the SIP module changes the ring-back-tone type from the local tone playing to the network tone playing.

For example, after the SIP module changes the ring-back-tone type from the local tone playing to the network tone playing, in a use scenario in which a user requirement is the manner 1, the reference identifier may be directly updated from the first value to the second value, that is, it is determined that the procedure of playing the ring back tone is already triggered currently by the calling terminal.

In another implementation, for example, in a use scenario in which a user requirement is the manner 2, as shown in FIG. 8, a timer may be started.

For processing performed in the scenario 1.2b after the ring-back-tone type is changed from the local tone playing to the network tone playing by using the 180 message and the timer is started, refer to the foregoing scenario 1.1b. Details are not described herein again.

### Scenario 1.2c:

For example, on the basis of the scenario 1.2b, if the SIP module of the calling terminal does not receive, within the duration of the timer, the RTP packet delivered by the network side, to ensure that the calling terminal can always play the ring back tone, and further ensure user experience, in this case, the SIP module may directly deliver an indication of local tone playing to the audio module, so that the audio module can locally obtain audio content from the calling terminal and start local tone playing. In addition, the SIP module updates the reference identifier from the first value to the second value.

For processing performed in the scenario 1.2c after the ring-back-tone type is changed from the local tone playing to the network tone playing by using the 180 message and the timer is started, refer to the foregoing scenario 1.1c. Details are not described herein again.

Scenario 1.3: Between the 183 message and the 180 message, the calling terminal receives another signaling message that indicates the ring back tone.

For example, an example in which the 183 message indicates local tone playing, and "183 Session Progress (PEM, Inactive)" shown in FIG. 9, that is, the 183 message carries the PEM header field, and the PEM header field = Inactive, is used as an example. Before determining that the 183 message indicates the local tone playing, and waiting for the 180 message delivered by the network side, the calling terminal receives another signaling message that is delivered by the network side and that indicates the ring back tone, for example, the Update message or another signaling message that can carry the PEM (where the Update message is used as an example in this embodiment). Because the Update message can indicate the ring back tone, after receiving the Update message, the calling terminal may determine, based on content in the Update message, whether the ring-back-tone type is changed, to update the value of the reference identifier.

For example, an example in which the 183 message indicates the local tone playing, and the Update message received before the 180 message indicates the network tone playing is used. In a use scenario in which a user requirement is the manner 1, the reference identifier may be directly updated from the first value to the second value, that is, it is determined that the procedure of playing the ring back tone is already triggered currently by the calling terminal.

In another implementation, for example, in a use scenario in which a user requirement is the manner 2, the scenario 1.3 may include specific implementation scenarios such as the scenario 1.1a, the scenario 1.1b, and the scenario 1.1c. For processing details that are not shown in this scenario, refer to the scenario 1.1a, the scenario 1.1b, and the scenario 1.1c. Details are not described herein again.

In addition, it should be further noted that, during actual application, the calling terminal may be directly set, based on a user requirement, to determine, when receiving the Update message (in a time period after the 183 message is received and before the 180 message is received), that the procedure of playing the ring back tone is already triggered currently. To be specific, the calling terminal does not pay attention to the ring-back-tone type indicated by the Update message, and directly considers that the procedure of playing the ring back tone is already triggered currently, regardless of whether the ring-back-tone type indicated by the Update message is the network tone playing or the local tone playing. Therefore, the calling terminal can be directly prevented from initiating the call request to the called terminal again.

It should be understood that the foregoing descriptions are merely examples listed for a better understanding of the technical solutions of this embodiment, and are not considered as a unique limitation on this embodiment.

Scenario 2: The network side does not support resource reservation (where the 183 message cannot be used as a ring-back-tone indication).

For example, for a case in which the IMS network does not support resource reservation, that is, the 183 message cannot be used as a ring-back-tone indication, the IMS network does not deliver the 183 message to the calling terminal. Therefore, the SIP module of the calling terminal cannot determine, based on the 183 message, whether the network tone playing or the local tone playing is to be performed at this time, that is, cannot determine whether the procedure of playing the ring back tone is already triggered currently. Therefore, to implement, in this scenario, an operation of determining whether the procedure of playing the ring back tone is already triggered currently, whether the network tone playing or the local tone playing is to be performed at this time may be directly determined based on another signaling message that can carry the PEM header field. Further, after the local tone playing or the network tone playing is determined, the value of the reference identifier is changed in a manner of determining whether the procedure of playing the ring back tone is already triggered currently in each specific implementation scenario in the scenario 1.

FIG. 10 is a schematic diagram in which, when the IMS network does not support delivery of the 183 message, the SIP module determines, based on the PEM header field carried in the Update message sent by the IMS network, whether the ring back tone to be performed at this time is the network tone playing or the local tone playing.

As shown in FIG. 10, in the process in which the calling terminal waits to establish the media session with the called terminal, if the SIP module receives "Update (PEM, not Inactive)" delivered by the IMS network, that is, the Update message in which the PEM header field is carried, and the PEM header field ≠ Inactive, it can be learned based on the standard shown in Table 2 that, in the scenario shown in FIG. 10, a ring-back-tone type determined by the SIP module based on the Update message is the network tone playing.

Processing performed in a scenario in which the Update message indicates the network tone playing also varies based on manners of user requirements.

For example, in a use scenario in which a user requirement is the manner 1, when it is determined, based on Update, that the ring-back-tone type is the network tone playing, the reference identifier may be directly updated from the first value to the second value, that is, it is determined that the procedure of playing the ring back tone is already triggered currently by the calling terminal.

In another implementation, for example, in a use scenario in which a user requirement is the manner 2, the scenario 2 may include specific implementation scenarios such as the scenario 1.1a, the scenario 1.1b, and the scenario 1.1c. For processing details that are not shown in this scenario, refer to the scenario 1.1a, the scenario 1.1b, and the scenario 1.1c. Details are not described herein again.

In addition, it should be further noted that, if the ring-back-tone type determined by the SIP module based on the Update message is the local ring back tone, determining of whether the calling terminal already triggers the procedure of playing the ring back tone and update processing of the value of the reference identifier may be performed based on processing logic of the specific implementation scenarios such as the scenario 1.2a, the scenario 1.2b, and the scenario 1.2c that are shown in FIG. 8. Details are not described herein again.

It can be learned from the descriptions of the foregoing scenario that, before the SIP module of the calling terminal receives the 180 message, if the 183 message or another signaling message indicates that the network tone playing is to be performed at this time, for this scenario, in a use scenario in which a user requirement is the manner 1, the reference identifier may be directly changed to the second value, that is, it is determined that the procedure of playing the ring back tone is already triggered currently. In a use scenario in which a user requirement is the manner 2, determining may be performed with reference to the RTP packet. For example, after the RTP packet delivered by the IMS network is received, the reference identifier is changed to the second value, that is, it indicates that the procedure of playing the ring back tone is already triggered currently. Before the RTP packet is not received, the reference identifier remains at the first value, that is, it indicates that the procedure of playing the ring back tone is not triggered currently.

In addition, it can further be learned from the descriptions of the foregoing scenario that, after the 180 message is received, if it is determined, based on content in the 180 message, that the local tone playing is to be performed at this time, the SIP module of the calling terminal immediately starts local tone playing. In this case, the reference identifier is changed to the second value, that is, it is determined that the procedure of playing the ring back tone is already triggered currently. If it is determined, based on the content in the 180 message, that the network tone playing is to be performed at this time, in a use scenario in which a user requirement is the manner 1, it may be directly determined, based on the signaling message, that the procedure of playing the ring back tone is already triggered currently. In a use scenario in which a user requirement is the manner 2, determining may be performed with reference to the RTP packet. For example, only after the RTP packet delivered by the IMS network is received, it is determined that the procedure of playing the ring back tone is already triggered currently.

In addition, it should be further noted that, before the ring back tone starts to be played, when the ring-back-tone type currently determined by the calling terminal is the local tone playing, processing may be performed based on processing logic of the specific implementation scenarios such as the scenario 1.2a, the scenario 1.2b, and the scenario 1.2c that are shown in FIG. 8.

Correspondingly, when the ring-back-tone type currently determined by the calling terminal is changed to the network tone playing, processing may be performed based on processing logic of the specific implementation scenarios such as the scenario 1.1a, the scenario 1.1b, and the scenario 1.1c that are shown in FIG. 7.

Based on this, when the reference identifier is the second value, call retrying is not performed regardless of whether the type of the ring back tone played by the calling terminal is the local tone playing or the network tone playing. Otherwise, when the reference identifier is the first value, call retrying may be performed.

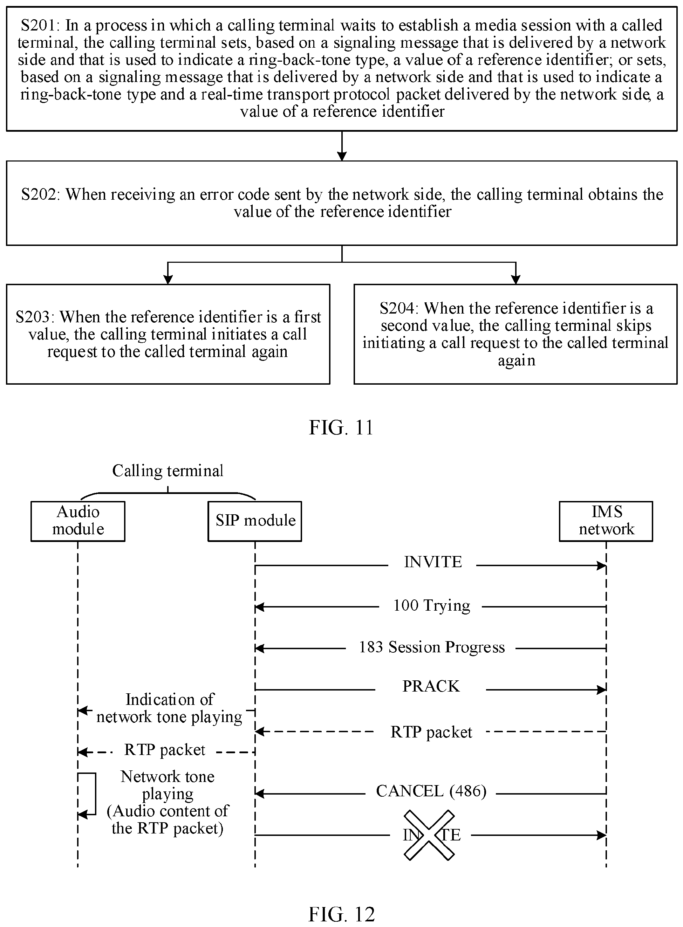

According to the foregoing manner in which the calling terminal determines, based on the introduced reference identifier, whether the procedure of playing the ring back tone is already triggered currently, a call processing method provided in this embodiment is shown in FIG. 11, and specifically includes the following steps.

S201: In a process in which a calling terminal waits to establish a media session with a called terminal, the calling terminal sets, based on a signaling message that is delivered by a network side and that is used to indicate a ring-back-tone type, a value of a reference identifier; or sets, based on a signaling message that is delivered by a network side and that is used to indicate a ring-back-tone type and a real-time transport protocol packet delivered by the network side, a value of a reference identifier.

The network side is, for example, an IMS network.

Correspondingly, the signaling message that is delivered by the network side and that is used to indicate the ring-back-tone type is, for example, the 183 message, the Update message, or the 180 message described in the foregoing embodiment.

Correspondingly, the real-time transport protocol (Real-time Transport Protocol) packet delivered by the network side is, for example, the RTP packet described in the foregoing embodiment. Specifically, in this embodiment, the RTP packet is specifically a data packet providing audio content of a network ring back tone.

It should be noted that, when the value of the reference identifier needs to be set based on the signaling message and the RTP packet, the ring-back-tone type indicated by the signaling message is network tone playing.

In addition, for logic of setting the value of the reference identifier, refer to the descriptions of the processing logic in the specific implementation scenarios in the scenario 1 and the scenario 2 in the foregoing embodiment, and details are not described herein again.

S202: When receiving an error code sent by the network side, the calling terminal obtains the value of the reference identifier.

S203: When the reference identifier is a first value, the calling terminal initiates a call request to the called terminal again.

S204: When the reference identifier is a second value, the calling terminal skips initiating a call request to the called terminal again.

For better understanding, the call processing method provided in this embodiment is described below with reference to a specific example.

Referring to FIG. 12, for example, in the process in which the calling terminal initiates an INVITE request and waits to establish the media session with the called terminal, the IMS network feeds back a session progress response of the call service to an SIM module of the calling terminal based on an actual call service progress. For example, for a case in which resource reservation is supported, a session progress is notified by using a 183 message, and the ring-back-tone type is indicated by using the 183 message.

Correspondingly, after receiving the 183 message delivered by the IMS network, the SIP module of the calling terminal may also feed back a PRACK message to the IMS network. In addition, in the process of establishing the media session, the reference identifier that can indicate whether the procedure of playing the ring back tone is triggered currently is set based on the received signaling message, such as the 183 message shown in FIG. 12.

It can be learned from the foregoing descriptions that, for a 183 message that does not carry a PEM header field, a ring-back-tone type indicated by the 183 message is a network ring back tone. In a use scenario in which a user requirement is the manner 1, it can be learned based on the foregoing descriptions that the reference identifier is updated from the first value to the second value. That is, in this use scenario, the SIP module of the calling terminal sets the reference identifier to the second value. However, in a use scenario in which a user requirement is the manner 2, when the 183 message indicating the network tone playing is received and before the RTP packet is not received, the reference identifier continues to remain at the first value. Only when the RTP packet is received, the reference identifier is updated to the second value. To be specific, in this use scenario, when the 183 message indicating the network tone playing is received and before the RTP packet is not received, the SIP module of the calling terminal sets the reference identifier to the first value. After receiving the RTP packet, the SIP module sets the reference identifier to the second value.

For ease of description, a use scenario in which a user requirement is the manner 2 is used as an example in this embodiment.

For example, if a reason for which the media session cannot be established is a busy line (Busy Here), an error code corresponding to the reason is 486. After the IMS network delivers, to the calling terminal, a CANCEL message corresponding to 486, the SIP module of the calling terminal may obtain and receive a current value of the reference identifier, to determine whether to trigger call retrying.

Still referring to FIG. 12, for example, before the CANCEL message is received, the value of the reference identifier is already set to the second value by the SIP module. It can be learned based on the foregoing explanations and descriptions for the first value and the second value of the reference identifier that, when the reference identifier is the second value, it indicates that the calling terminal already currently triggers the procedure of playing the ring back tone. However, in the foregoing embodiment, it can be learned from the descriptions of steps S101 to S103 and step S204 that, when the calling terminal already currently triggers the procedure of playing the ring back tone, the calling terminal skips initiating the call request to the called terminal again. Therefore, based on the call processing method provided in this embodiment of this application, when it is determined that the calling terminal already triggers the procedure of playing the ring back tone, after the calling terminal receives the CANCEL message, the SIP module skips performing call retrying on the called terminal. In this way, a case in which the calling terminal both plays the network ring back tone and triggers call retrying is avoided, so that no use confusion is caused to a user.

It should be understood that the descriptions of the scenario shown in FIG. 12 are merely examples listed for a better understanding of the technical solutions of this embodiment, and are not considered as a unique limitation on this embodiment. Based on the call processing method provided in this embodiment, when the call processing method is applied to any foregoing scenario, as long as the reference identifier is the first value when the error code is received, the calling terminal may trigger call retrying, that is, initiate the call request to the called terminal again. Correspondingly, when the reference identifier is the second value, the calling terminal skips triggering call retrying, that is, does not initiate the call request to the called terminal.

For example, FIG. 13 and FIG. 14 show that, in a scenario in which the calling terminal determines the network tone playing when receiving the RTP packet sent by the IMS network, after the 183 message indicating the network tone playing reaches the SIP module of the calling terminal, the current reference identifier may be determined as the first value based on the procedure of determining the reference identifier provided in the foregoing embodiment.

Still referring to FIG. 13 and FIG. 14, for example, before receiving the RTP packet, if the calling terminal first receives the CANCEL message sent by the IMS network, because before the CANCEL message is received, the determined reference identifier is the first value, that is, the calling terminal currently does not trigger playing of the ring back tone, in this scenario, the calling terminal may trigger call retrying.

For example, that the calling terminal triggers call retrying shown in FIG. 13 specifically refers to that the calling terminal directly performs call retrying on the called terminal in the IMS network, that is, performs PS retrying.

Because a previous call service ends after the PS retrying is triggered, if the IMS network has not delivered the RTP packet, the IMS network does not deliver the RTP packet to the calling terminal again, but directly responds to an INVITE request initiated by the calling terminal again. Therefore, during the PS retrying, a case in which the calling terminal both plays the network ring back tone and triggers call retrying is avoided, so that no use confusion is caused to a user.

For example, that the calling terminal triggers call retrying shown in FIG. 14 specifically refers to that the calling terminal first switches from the IMS network to a CS network, and then performs call retrying on the called terminal in the CS network, that is, performs CS retrying.

Because a previous call service is received after the CS retrying is triggered, if the IMS network has not delivered the RTP packet, the IMS network does not deliver the RTP packet to the calling terminal again. Therefore, during the CS retrying, a case in which the calling terminal both plays the network ring back tone and triggers call retrying is avoided, so that no use confusion is caused to a user.

It should be understood that the descriptions of the scenarios shown in FIG. 13 and FIG. 14 are merely examples listed for a better understanding of the technical solutions of this embodiment, and are not considered as a unique limitation on this embodiment.

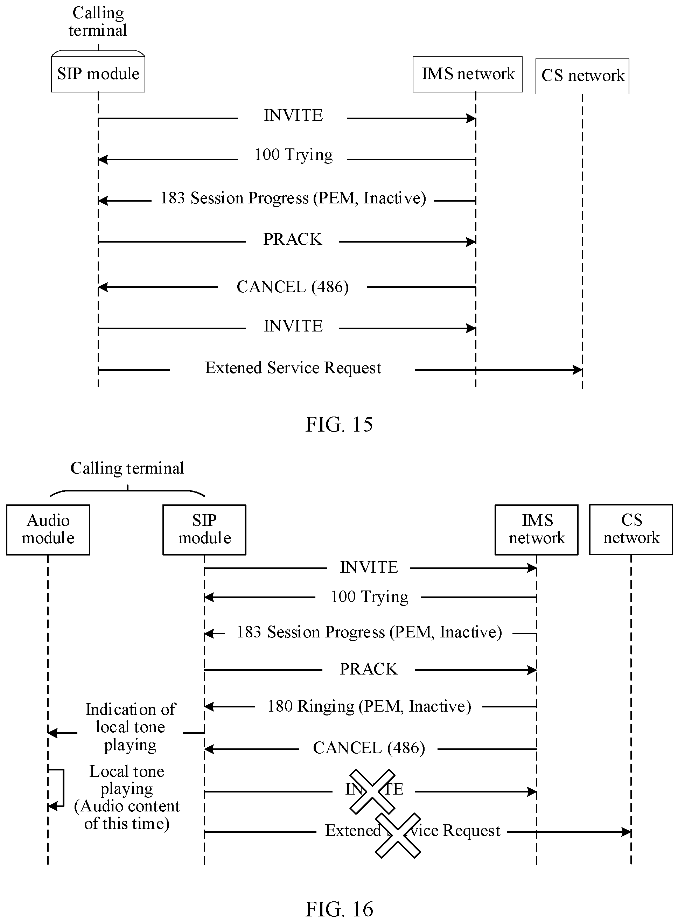

For example, FIG. 15 shows a scenario in which, in the process in which the calling terminal waits to establish the media session with the called terminal, the 183 message sent by the IMS network to the calling terminal indicates the calling terminal to play a local ring back tone.

For example, in the process in which the calling terminal waits to establish the media session with the called terminal, after the calling terminal receives the 183 message (for example, "183 Session Progress (PEM, Inactive)" shown in FIG. 15) indicating the local ring back tone, because local tone playing can be triggered only when the 180 message is received, the reference identifier determined by the calling terminal is the first value. Therefore, when the reference identifier is the first value, after the CANCEL message sent by the IMS network is received, the calling terminal may trigger call retrying, that is, initiate the call request to the called terminal again.

Still referring to FIG. 15, for example, for this scenario, the call retrying triggered by the calling terminal may also be PS retrying (corresponding to the 2^{nd} "INVITE" in FIG. 15), or may be CS retrying (corresponding to "Extened Service Request" in FIG. 15). In this way, a case in which the calling terminal both plays the local ring back tone and triggers call retrying is avoided, so that no use confusion is caused to a user.

It should be understood that the descriptions of the scenario shown in FIG. 15 are merely examples listed for a better understanding of the technical solutions of this embodiment, and are not considered as a unique limitation on this embodiment.

For example, FIG. 16 shows a scenario in which, in the process in which the calling terminal waits to establish the media session with the called terminal, the 183 message sent by the IMS network to the calling terminal indicates the calling terminal to play a local ring back tone. In addition, in this scenario, before receiving the 180 message sent by the IMS network, the calling terminal does not receive another signaling message for modifying a ring-back-tone type, and the finally received 180 message also does not modify the ring-back-tone type, that is, the ring-back-tone type is always the local ring back tone.

For example, in the process in which the calling terminal waits to establish the media session with the called terminal, after the calling terminal receives the 183 message (for example, "183 Session Progress (PEM, Inactive)" shown in FIG. 16) indicating the local ring back tone, because local tone playing can be triggered only when the 180 message is received, the reference identifier determined by the calling terminal is the first value.

After the reference identifier is determined as the first value, the calling terminal does not receive the CANCEL message delivered by the IMS network, but receives the 180 message indicating the local tone playing. Therefore, the procedure of updating the value of the reference identifier is triggered again. In this case, the reference identifier is changed from the first value to the second value.

Still referring to FIG. 16, for example, after the reference identifier is changed to the second value, the calling terminal receives the CANCEL message delivered by the IMS network. In this case, because the reference identifier is the second value, that is, the calling terminal already triggers the procedure of playing the ring back tone, even if the CANCEL message is received, the SIP module skips performing call retrying on the called terminal. In this way, a case in which the calling terminal both plays the local ring back tone and triggers call retrying is avoided, so that no use confusion is caused to a user.

It should be understood that the descriptions of the scenario shown in FIG. 16 are merely examples listed for a better understanding of the technical solutions of this embodiment, and are not considered as a unique limitation on this embodiment.

In addition, it should be noted that, in some implementations, as shown in FIG. 17, the error code (which is still represented by using the CANCEL message) that is sent by the IMS network and that indicates that the call of the media session of this time is abnormal may be first sent to the calling terminal, and then the signaling message and the RTP packet that are related to the ring back tone may reach the calling terminal.

Referring to FIG. 17, for example, after the calling terminal actively initiates the call request INVITE to the called terminal and receives 100 Trying fed back by the called terminal via the IMS network, the calling terminal first receives, before receiving the 183 message sent by the IMS network, the CANCEL message corresponding to the error code 486. In this scenario in which no signaling message or RTP packet that can be used to update the value of the reference identifier is received before the CANCEL message is received, the initial value of the reference identifier is the first value. Therefore, for this scenario in which the CANCEL message is first received, the calling terminal may directly trigger call retrying.

It should be understood that the descriptions of the scenario shown in FIG. 17 are merely examples listed for a better understanding of the technical solutions of this embodiment, and are not considered as a unique limitation on this embodiment.

In addition, it may be understood that, to implement the foregoing functions, the terminal device includes corresponding hardware and/or software modules for performing the functions. Algorithm steps in the examples described with reference to the embodiments disclosed in this specification can be implemented in this application by hardware or a combination of hardware and computer software. Whether a function is implemented by hardware or computer software driving hardware depends upon a particular application and design constraint of the technical solution. A person skilled in the art may use different methods to implement the described functions for each particular application when falling within the scope of the appended claims.

In addition, it should be noted that, in an actual application scenario, the call processing method that is provided in the foregoing embodiments and that is implemented by the terminal device may alternatively be performed by a chip system included in the terminal device. The chip system may include a processor. The chip system may be coupled to a memory, so that the chip system invokes, when running, a computer program stored in the memory, to implement the foregoing steps performed by the terminal device. The processor in the chip system may be an application processor, or may be a processor that is a non-application processor.

In addition, an embodiment of this application may further provide a computer-readable storage medium. The computer storage medium stores computer instructions, and when the computer instructions are run on a terminal device, the terminal device is enabled to perform the foregoing related method steps, to implement the call processing method in the foregoing embodiments.

In addition, an embodiment of this application may further provide a computer program product. When the computer program product is run on a terminal device, the terminal device is enabled to perform the foregoing related method steps, to implement the call processing method in the foregoing embodiments.

In addition, an embodiment of this application may further provide a chip system. The chip system includes a processor, configured to invoke a computer program from a memory and run the computer program, to enable a terminal device in which the chip system is installed to perform the method in any one of the possible implementations of the foregoing embodiments. In a possible design, the chip system further includes an interface circuit. The interface circuit may be configured to receive a signal from another apparatus (for example, a memory) or send a signal to another apparatus (for example, a communication interface). The chip system may include a chip, or may include other discrete devices.

In addition, it may be learned from the foregoing descriptions that, the terminal device, the computer-readable storage medium, the computer program product, or the chip may be configured to perform the corresponding method provided above. Therefore, for beneficial effects that can be achieved by the terminal device, the computer-readable storage medium, the computer program product, or the chip, refer to the beneficial effects in the corresponding method provided above. Details are not described herein again.

## Claims

1. A call processing method, applied to a calling terminal initiating a call request, wherein the call processing method comprises:
in a process in which the calling terminal waits to establish a media session with a called terminal, when the calling terminal receives an error code sent by a network side, determining (S101) whether a procedure of playing a ring back tone is already triggered currently; and
when determining that the procedure of playing the ring back tone is not triggered currently, initiating (S102), by the calling terminal, a call request to the called terminal again; or
when determining that the procedure of playing the ring back tone is already triggered currently, skipping (S103), by the calling terminal, initiating a call request to the called terminal again; wherein the determining (S101) whether the procedure of playing the ring back tone is already triggered currently comprises:
determining, based on a signaling message that is delivered by the network side and that is used to indicate a ring-back-tone type, whether the procedure of playing the ring back tone is already triggered currently; wherein
the signaling message comprises a first signaling message, the first signaling message is the 1^{st} signaling message that is delivered by the network side after the calling terminal initiates the call request and that indicates a ring-back-tone type, and the ring-back-tone type is used to indicate the calling terminal to perform local tone playing or network tone playing; and
the determining, based on the signaling message that is delivered by the network side and that is used to indicate the ring-back-tone type;
wherein the determining (S101) whether the procedure of playing the ring back tone is already triggered currently further comprises:
when the ring-back-tone type indicated by the first signaling message indicates the calling terminal to perform local tone playing, determining that the procedure of playing the ring back tone is not triggered currently.

2. A call processing method, applied to a calling terminal initiating a call request, wherein the call processing method comprises:
in a process in which the calling terminal waits to establish a media session with a called terminal, when the calling terminal receives an error code sent by a network side, determining (S101) whether a procedure of playing a ring back tone is already triggered currently, wherein the procedure of the ring back tone comprises a procedure of a ring back tone whose ring-back-tone type is network tone playing or a procedure of a ring back tone of local tone playing, wherein the determining (S101) whether the procedure of playing the ring back tone is already triggered currently comprises: when determining that neither of the procedure of playing the ring back tone of network tone playing and the procedure of playing the ring back tone of local tone playing is triggered currently, determining that the procedure of playing the ring back tone is not triggered currently; otherwise, determining that the procedure of playing the ring back tone is already triggered currently; and
when determining that the procedure of playing the ring back tone is not triggered currently, initiating (S102), by the calling terminal, a call request to the called terminal again; or
when determining that the procedure of playing the ring back tone is already triggered currently, skipping (S103), by the calling terminal, initiating a call request to the called terminal again.

3. The call processing method according to claim 2, wherein the determining (S101) whether a procedure of playing a ring back tone is already triggered currently comprises:
determining, based on a signaling message that is delivered by the network side and that is used to indicate a ring-back-tone type, whether the procedure of playing the ring back tone is already triggered currently.

4. The call processing method according to claim 3, wherein the signaling message comprises a first signaling message, the first signaling message is the 1^{st} signaling message that is delivered by the network side after the calling terminal initiates the call request and that indicates a ring-back-tone type, and the ring-back-tone type is used to indicate the calling terminal to perform local tone playing or network tone playing; and
the determining, based on a signaling message that is delivered by the network side and that is used to indicate a ring-back-tone type, whether the procedure of playing the ring back tone is already triggered currently comprises:
when the first signaling message is received, determining that the procedure of playing the ring back tone is already triggered currently.

5. The call processing method according to claim 3, wherein the signaling message comprises a first signaling message, the first signaling message is the 1^{st} signaling message that is delivered by the network side after the calling terminal initiates the call request and that indicates a ring-back-tone type, and the ring-back-tone type is used to indicate the calling terminal to perform local tone playing or network tone playing; and
the determining, based on a signaling message that is delivered by the network side and that is used to indicate a ring-back-tone type, whether the procedure of playing the ring back tone is already triggered currently comprises:
when the ring-back-tone type indicated by the first signaling message indicates the calling terminal to perform network tone playing, determining that the procedure of playing the ring back tone is already triggered currently.

6. The call processing method according to claim 3, wherein the signaling message comprises a first signaling message, the first signaling message is the 1^{st} signaling message that is delivered by the network side after the calling terminal initiates the call request and that indicates a ring-back-tone type, and the ring-back-tone type is used to indicate the calling terminal to perform local tone playing or network tone playing; and
the determining, based on a signaling message that is delivered by the network side and that is used to indicate a ring-back-tone type, whether the procedure of playing the ring back tone is already triggered currently further comprises:
when the ring-back-tone type indicated by the first signaling message indicates the calling terminal to perform local tone playing, determining that the procedure of playing the ring back tone is not triggered currently.

7. The call processing method according to claim 2, wherein the determining whether a procedure of playing a ring back tone is already triggered currently comprises:
determining, based on a signaling message that is delivered by the network side and that is used to indicate a ring-back-tone type and an RTP packet delivered by the network side, whether the procedure of playing the ring back tone is already triggered currently, wherein
the RTP packet is an audio packet corresponding to a ring back tone whose ring-back-tone type is network tone playing.

8. A terminal device (100), wherein the terminal device (100) comprises a memory (121) and a processor (110), and the memory (121) is coupled to the processor (110); and the memory (121) stores computer instructions, and when the computer instructions are executed by the processor (110), the terminal device (100) is enabled to perform the call processing method according to claim 1, or perform the call processing method according to any one of claims 2 to 7.

## Patentansprüche

1. Ein Verfahren zur Anrufbearbeitung, das auf ein anrufendes Terminal angewendet wird, das eine Anrufanforderung initiiert, wobei das Verfahren zur Anrufbearbeitung Folgendes umfasst:
In einem Prozess, in dem das anrufende Terminal darauf wartet, eine Mediensitzung mit einem angerufenen Terminal herzustellen, wird, wenn das anrufende Terminal einen vom Netzwerk gesendeten Fehlercode erhält, bestimmt (S101), ob das Verfahren zum Abspielen des Rückruftons derzeit bereits ausgelöst wurde; und
Wenn festgestellt wird, dass das Verfahren zum Abspielen des Rückruftons derzeit nicht ausgelöst wurde, initiiert das anrufende Terminal (S102) erneut eine Anrufanforderung an das angerufene Terminal; oder
Wenn festgestellt wird, dass das Verfahren zum Abspielen des Rückruftons derzeit bereits ausgelöst wurde, überspringt das anrufende Terminal (S103) die erneute Initiierung einer Anrufanforderung an das angerufene Terminal; wobei die Feststellung (S101), ob das Verfahren zum Abspielen des Rückruftons derzeit bereits ausgelöst wurde, Folgendes umfasst:
Die Feststellung erfolgt auf Grundlage einer vom Netzwerk bereitgestellten Signalisierungsnachricht, die verwendet wird, um einen Rückrufton-Typ anzuzeigen, ob das Verfahren zum Abspielen des Rückruftons derzeit bereits ausgelöst wurde; wobei
Die Signalisierungsnachricht umfasst eine erste Signalisierungsnachricht; die erste Signalisierungsnachricht ist die erste vom Netzwerk bereitgestellte Signalisierungsnachricht nach der Initiierung der Anrufanforderung durch das anrufende Terminal und zeigt einen Rückrufton-Typ an; und der Rückrufton-Typ dient dazu anzuzeigen, ob das anrufende Terminal einen lokalen Ton oder einen Netzwerkton abspielen soll; und
Die Feststellung erfolgt auf der Grundlage der vom Netzwerk bereitgestellten Signalisierungsnachricht, die verwendet wird, um den Rückrufton-Typ anzuzeigen;
Wobei die Feststellung (S101), ob das Verfahren zum Abspielen des Rückruftons derzeit bereits ausgelöst wurde, ferner Folgendes umfasst:
Wenn der durch die erste Signalisierungsnachricht angezeigte Rückrufton-Typ angibt, dass das anrufende Terminal einen lokalen Ton abspielen soll, wird festgestellt, dass das Verfahren zum Abspielen des Rückruftons derzeit nicht ausgelöst wurde.

2. Ein Verfahren zur Anrufbearbeitung, das auf ein anrufendes Terminal angewendet wird, das eine Anrufanforderung initiiert, wobei das Verfahren zur Anrufbearbeitung Folgendes umfasst:
In einem Vorgang, bei dem das anrufende Endgerät darauf wartet, eine Mediensitzung mit dem angerufenen Endgerät herzustellen, wird beim Empfang eines vom Netz gesendeten Fehlercodes durch das anrufende Endgerät bestimmt (S101), ob ein Verfahren zum Abspielen eines Rückruftons derzeit bereits ausgelöst ist, wobei das Verfahren des Rückruftons einen Vorgang eines Rückruftons mit Rückrufton-Typ Netzton-Wiedergabe oder einen Vorgang eines Rückruftons mit Rückrufton-Typ lokale Tonwiedergabe umfasst. Das Bestimmen (S101), ob das Verfahren zum Abspielen des Rückruftons derzeit bereits ausgelöst ist, beinhaltet: Wenn festgestellt wird, dass weder das Verfahren zum Abspielen des Rückruftons als Netzton noch das Verfahren zum Abspielen des Rückruftons als lokaler Ton derzeit ausgelöst ist, wird erkannt, dass das Verfahren zum Abspielen des Rückruftons derzeit nicht ausgelöst ist; andernfalls wird erkannt, dass das Verfahren zum Abspielen des Rückruftons derzeit bereits ausgelöst ist; und
Wenn festgestellt wird, dass das Verfahren zum Abspielen des Rückruftons derzeit nicht ausgelöst ist, wird (S102) vom anrufenden Endgerät erneut eine Anrufanforderung an das angerufene Endgerät gesendet; oder
Wenn festgestellt wird, dass das Verfahren zum Abspielen des Rückruftons derzeit bereits ausgelöst ist, wird (S103) vom anrufenden Endgerät darauf verzichtet, erneut eine Anrufanforderung an das angerufene Endgerät zu senden.

3. Das Anrufverarbeitungsverfahren gemäß Anspruch 2, wobei das Bestimmen (S101), ob ein Verfahren zum Abspielen eines Rückruftons derzeit bereits ausgelöst ist, Folgendes umfasst:
Bestimmen, basierend auf einer vom Netz gesendeten Signalisierungsnachricht, die zum Anzeigen eines Rückrufton-Typs dient, ob das Verfahren zum Abspielen des Rückruftons derzeit bereits ausgelöst ist.

4. Das Anrufverarbeitungsverfahren gemäß Anspruch 3, wobei die Signalisierungsnachricht eine erste Signalisierungsnachricht umfasst, wobei die erste Signalisierungsnachricht die nach Einleitung der Anrufanforderung vom anrufenden Endgerät vom Netz übermittelte erste Signalisierungsnachricht ist, die einen Rückrufton-Typ anzeigt, und der Rückrufton-Typ dient dazu, dem anrufenden Endgerät die lokale Tonwiedergabe oder die Netzton-Wiedergabe anzuzeigen; und
Das Bestimmen, basierend auf einer vom Netz gesendeten Signalisierungsnachricht, die zum Anzeigen eines Rückrufton-Typs dient, ob das Verfahren zum Abspielen des Rückruftons derzeit bereits ausgelöst ist, umfasst:
Wenn die erste Signalisierungsnachricht empfangen wird, wird festgestellt, dass das Verfahren zum Abspielen des Rückruftons derzeit bereits ausgelöst ist.

5. Das Anrufbearbeitungsverfahren gemäß Anspruch 3, wobei die Signalisierungsnachricht eine erste Signalisierungsnachricht umfasst; die erste Signalisierungsnachricht ist die 1. vom Netzseite nach Initiierung der Anrufanfrage durch das anrufende Endgerät übermittelte Signalisierungsnachricht, die den Typ des Rückruftons angibt, wobei der Rückrufton-Typ verwendet wird, um dem anrufenden Endgerät anzuzeigen, entweder den lokalen Ton oder den Netz-Ton abzuspielen; und
Die Bestimmung, basierend auf einer vom Netzseite übermittelten Signalisierungsnachricht, die zum Anzeigen eines Rückrufton-Typs verwendet wird, ob das Verfahren zum Abspielen des Rückruftons bereits ausgelöst wurde, umfasst:
Wenn der durch die erste Signalisierungsnachricht angegebene Rückrufton-Typ dem anrufenden Endgerät das Abspielen des Netz-Tons anzeigt, wird festgestellt, dass das Verfahren zum Abspielen des Rückruftons bereits ausgelöst wurde.

6. Das Anrufbearbeitungsverfahren gemäß Anspruch 3, wobei die Signalisierungsnachricht eine erste Signalisierungsnachricht umfasst; die erste Signalisierungsnachricht ist die 1. vom Netzseite nach Initiierung der Anrufanfrage durch das anrufende Endgerät übermittelte Signalisierungsnachricht, die den Typ des Rückruftons angibt, wobei der Rückrufton-Typ verwendet wird, um dem anrufenden Endgerät anzuzeigen, entweder den lokalen Ton oder den Netz-Ton abzuspielen; und
Die Bestimmung, basierend auf einer vom Netzseite übermittelten Signalisierungsnachricht, die zum Anzeigen eines Rückrufton-Typs verwendet wird, ob das Verfahren zum Abspielen des Rückruftons bereits ausgelöst wurde, umfasst außerdem:
Wenn der durch die erste Signalisierungsnachricht angegebene Rückrufton-Typ dem anrufenden Endgerät das Abspielen des lokalen Tons anzeigt, wird festgestellt, dass das Verfahren zum Abspielen des Rückruftons aktuell nicht ausgelöst wurde.

7. Das Anrufbearbeitungsverfahren gemäß Anspruch 2, wobei die Bestimmung, ob ein Verfahren zum Abspielen eines Rückruftons bereits ausgelöst wurde, umfasst:
Feststellen, basierend auf einer vom Netzseite übermittelten Signalisierungsnachricht, die zum Anzeigen eines Rückrufton-Typs verwendet wird und einem vom Netzseite übermittelten RTP-Paket, ob das Verfahren zum Abspielen des Rückruftons bereits ausgelöst wurde, wobei
das RTP-Paket ein Audiopaket ist, das einem Rückrufton entspricht, dessen Rückrufton-Typ Netz-Ton ist.

8. Ein Endgerät (100), wobei das Endgerät (100) einen Speicher (121) und einen Prozessor (110) umfasst, und der Speicher (121) mit dem Prozessor (110) gekoppelt ist; und der Speicher (121) Computersoftwareanweisungen speichert, und wenn die Computersoftwareanweisungen vom Prozessor (110) ausgeführt werden, ist das Endgerät (100) dazu befähigt, das Anrufverarbeitungsverfahren gemäß Anspruch 1 auszuführen oder das Anrufverarbeitungsverfahren gemäß einem der Ansprüche 2 bis 7 auszuführen.

## Revendications

1. Un procédé de traitement d'appel, appliqué à un terminal appelant initiant une demande d'appel, dans lequel le procédé de traitement d'appel comprend :
dans un processus où le terminal appelant attend d'établir une session multimédia avec un terminal appelé, lorsque le terminal appelant reçoit un code d'erreur transmis par le réseau, déterminer (S101) si la procédure de lecture de la tonalité de retour d'appel est déjà déclenchée actuellement ; et
lorsqu'il est déterminé que la procédure de lecture de la tonalité de retour d'appel n'est pas déclenchée actuellement, le terminal appelant initie (S102) une nouvelle demande d'appel auprès du terminal appelé ; ou
lorsqu'il est établi que la procédure de lecture de la tonalité de retour d'appel est déjà déclenchée actuellement, le terminal appelant saute (S103) l'initiation d'une nouvelle demande d'appel auprès du terminal appelé ; où la détermination (S101) du déclenchement actuel de la procédure de lecture de la tonalité de retour d'appel comprend :
déterminer, sur la base d'un message de signalisation transmis par le réseau et utilisé pour indiquer le type de tonalité de retour d'appel, si la procédure de lecture de la tonalité de retour d'appel est déjà déclenchée actuellement ; dans lequel
le message de signalisation comprend un premier message de signalisation, le 1^{er} message de signalisation étant le premier message transmis par le réseau après que le terminal appelant a initié la demande d'appel et indiquant le type de tonalité de retour d'appel, et le type de tonalité de retour d'appel servant à indiquer au terminal appelant d'effectuer soit la lecture locale de la tonalité, soit la lecture par le réseau ; et
la détermination, basée sur le message de signalisation transmis par le réseau et utilisé pour indiquer le type de tonalité de retour d'appel ;
où la détermination (S101) du déclenchement actuel de la procédure de lecture de la tonalité de retour d'appel comprend en outre :
lorsque le type de tonalité de retour d'appel indiqué par le premier message de signalisation indique au terminal appelant d'effectuer la lecture locale de la tonalité, déterminer que la procédure de lecture de la tonalité de retour d'appel n'est pas déclenchée actuellement.

2. Un procédé de traitement d'appel, appliqué à un terminal appelant initiant une demande d'appel, dans lequel le procédé de traitement d'appel comprend :
dans un processus où le terminal appelant attend d'établir une session multimédia avec un terminal appelé, lorsque le terminal appelant reçoit un code d'erreur envoyé par le côté réseau, il s'agit de déterminer (S101) si une procédure de lecture de la tonalité de retour d'appel est déjà déclenchée actuellement, la procédure de tonalité de retour d'appel incluant une procédure où le type de tonalité de retour d'appel est soit la lecture de la tonalité réseau, soit la lecture de la tonalité locale. Cette détermination (S101) quant au déclenchement de la procédure de lecture de la tonalité de retour d'appel comprend : lorsqu'il est déterminé qu'aucune des procédures de lecture de la tonalité de retour d'appel de type réseau ou locale n'est actuellement déclenchée, il est conclu que la procédure de lecture de la tonalité de retour d'appel n'est pas déclenchée actuellement ; sinon, il est conclu que la procédure de lecture de la tonalité de retour d'appel est déjà déclenchée ; et
lorsqu'il est déterminé que la procédure de lecture de la tonalité de retour d'appel n'est pas déclenchée actuellement, le terminal appelant initie (S102) une nouvelle demande d'appel vers le terminal appelé ; ou
lorsqu'il est déterminé que la procédure de lecture de la tonalité de retour d'appel est déjà déclenchée actuellement, le terminal appelant saute (S103) l'initiation d'une nouvelle demande d'appel vers le terminal appelé.

3. Le procédé de traitement d'appel selon la revendication 2, où la détermination (S101) si une procédure de lecture de la tonalité de retour d'appel est déjà déclenchée actuellement comprend :
déterminer, sur la base d'un message de signalisation transmis par le côté réseau et utilisé pour indiquer un type de tonalité de retour d'appel, si la procédure de lecture de la tonalité de retour d'appel est déjà déclenchée actuellement.

4. Le procédé de traitement d'appel selon la revendication 3, où le message de signalisation comprend un premier message de signalisation, ce premier message de signalisation étant le premier message transmis par le côté réseau après que le terminal appelant a initié la demande d'appel et qui indique un type de tonalité de retour d'appel ; et le type de tonalité de retour d'appel sert à indiquer au terminal appelant d'effectuer une lecture locale ou réseau de la tonalité d'appel ; et
la détermination, sur la base d'un message de signalisation transmis par le côté réseau et utilisé pour indiquer un type de tonalité de retour d'appel, si la procédure de lecture de la tonalité de retour d'appel est déjà déclenchée actuellement comprend :
lorsque le premier message de signalisation est reçu, il est déterminé que la procédure de lecture de la tonalité de retour d'appel est déjà déclenchée actuellement.

5. Le procédé de traitement d'appel selon la revendication 3, dans lequel le message de signalisation comprend un premier message de signalisation, le premier message de signalisation étant le premier message transmis par le réseau après que le terminal appelant a initié la demande d'appel, et indiquant un type de tonalité de retour d'appel ; le type de tonalité de retour d'appel étant utilisé pour indiquer au terminal appelant d'effectuer une lecture de tonalité locale ou une lecture de tonalité réseau ; et
la détermination, sur la base d'un message de signalisation transmis par le réseau et utilisé pour indiquer un type de tonalité de retour d'appel, de savoir si la procédure de lecture de la tonalité de retour d'appel est actuellement déjà déclenchée, comprend :
lorsque le type de tonalité de retour d'appel indiqué par le premier message de signalisation indique au terminal appelant d'effectuer la lecture de la tonalité réseau, déterminer que la procédure de lecture de la tonalité de retour d'appel est actuellement déjà déclenchée.

6. Le procédé de traitement d'appel selon la revendication 3, dans lequel le message de signalisation comprend un premier message de signalisation, le premier message de signalisation étant le premier message transmis par le réseau après que le terminal appelant a initié la demande d'appel, et indiquant un type de tonalité de retour d'appel ; le type de tonalité de retour d'appel étant utilisé pour indiquer au terminal appelant d'effectuer une lecture de tonalité locale ou une lecture de tonalité réseau ; et
la détermination, sur la base d'un message de signalisation transmis par le réseau et utilisé pour indiquer un type de tonalité de retour d'appel, de savoir si la procédure de lecture de la tonalité de retour d'appel est déjà déclenchée, comprend en outre :
lorsque le type de tonalité de retour d'appel indiqué par le premier message de signalisation indique au terminal appelant d'effectuer la lecture de la tonalité locale, déterminer que la procédure de lecture de la tonalité de retour d'appel n'est pas actuellement déclenchée.

7. Le procédé de traitement d'appel selon la revendication 2, dans lequel la détermination de savoir si une procédure de lecture d'une tonalité de retour d'appel est déjà déclenchée actuellement comprend :
déterminer, sur la base d'un message de signalisation transmis par le réseau et utilisé pour indiquer un type de tonalité de retour d'appel et d'un paquet RTP transmis par le réseau, si la procédure de lecture de la tonalité de retour d'appel est déjà déclenchée à l'heure actuelle, dans lequel
le paquet RTP est un paquet audio correspondant à une tonalité de retour d'appel dont le type de tonalité de retour d'appel est une lecture de tonalité réseau.

8. Un dispositif terminal (100), dans lequel le dispositif terminal (100) comprend une mémoire (121) et un processeur (110), la mémoire (121) étant couplée au processeur (110) ; et la mémoire (121) stocke des instructions informatiques, et lorsque les instructions informatiques sont exécutées par le processeur (110), le dispositif terminal (100) est conçu pour exécuter le procédé de traitement d'appel selon la revendication 1, ou exécuter le procédé de traitement d'appel selon l'une quelconque des revendications 2 à 7.
